# EUROPEAN PATENT APPLICATION

(11) **EP 4 387 379 A1**
(43) Date of publication of application: **19.06.2024**
(21) Application number: 22860256.1
(22) Date of filing: 10.08.2022
(51) Int. Cl.: H04W 76/15

(54) **COMMUNICATION METHOD AND APPARATUS**

(30) Priority: 25.08.2021 CN 202110982180; 30.10.2021 CN 202111277521
(71) Applicant: Huawei Technologies Co., Ltd., Shenzhen, Guangdong 518129 (CN)
(72) Inventor: DOU, Fenghui, Shenzhen, Guangdong 518129 (CN); JIN, Hui, Shenzhen, Guangdong 518129 (CN)
(74) Representative: Pfenning, Meinig & Partner mbB
(86) International application number: PCT/CN2022/111533
(87) International publication number: WO 2023/024910

(57) **Abstract**

This application relates to a communication method and apparatus. A first terminal device sends a first message, where the first message is used to request to establish a first PDU session for the first terminal device, the first message further includes an identifier of a second terminal device and an identifier of a second PDU session, and the identifier of the second terminal device and the identifier of the second PDU session are used by a first network device to select a second network device or used to establish an association relationship between the first PDU session and the second PDU session. The first terminal device receives a second message from the first network device, where the second message includes information for accepting the establishment of the first PDU session. For example, service data can be transferred between PDU sessions having an association relationship, and service data of the first PDU session can be transferred to the second PDU session, or service data of the second PDU session can be transferred to the first PDU session. This reduces a service interruption time period taken in a media transfer process, and even a service does not need to be interrupted in the media transfer process. This improves service transmission quality and improves user experience.

## Description

### CROSS-REFERENCE TO RELATED APPLICATIONS

This application claims priority to Chinese Patent Application No. 202110982180.8, filed with the China National Intellectual Property Administration on August 25, 2021 and entitled "CROSS-DEVICE TRANSFER METHOD", which is incorporated herein by reference in its entirety; and this application claims priority to Chinese Patent Application No. 202111277521.8, filed with the China National Intellectual Property Administration on October 30, 2021 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

With development of electronic technologies, a user owns an increasing quantity of electronic devices. For example, the user may have electronic devices having a communication capability, such as a mobile phone, a tablet computer (i.e. PAD), a smart television, a personal computer (personal computer, PC), and a smartwatch. When using a plurality of electronic devices, the user may need to transfer media from one device to another device.

For example, the user watches a video on a website by using a mobile phone on the way home, turns on a smart television after returning home, and logs in to a same account by using the smart television, to continue to watch the video. This is also a process of transferring media from one device to another device. In this case, when the user continues to watch the video by using the smart television, the smart television needs to re-establish a connection to an application server of the video before starting to play the video. In other words, in this media transfer process, when a next device is used to continue to receive media information, the next device needs to re-establish a connection to the application server. This causes a long service interruption time period.

It can be learned that the current media transfer process may cause the long service interruption time period.

### SUMMARY

Embodiments of this application provide a communication method and apparatus, to reduce a service interruption time period taken in a media transfer process.

According to a first aspect, a first communication method is provided. The method may be performed by a terminal device, may be performed by a larger device including a terminal device, or may be performed by a chip system or another function module. The chip system or the function module can implement a function of a terminal device. The chip system or the function module is, for example, disposed in the terminal device. The terminal device is, for example, referred to as a first terminal device. The method includes: sending a first message, where the first message is used to request to establish a first protocol data unit (protocol data unit, PDU) session (session) for the first terminal device, the first message further includes an identifier of a second terminal device and an identifier of a second PDU session, the second PDU session is a PDU session of the second terminal device, and the identifier of the second terminal device and the identifier of the second PDU session are used by a first network device to select a second network device or used to establish an association relationship between the first PDU session and the second PDU session; and receiving a second message from the first network device, where the second message includes information for accepting the establishment of the first PDU session.

In this embodiment of this application, the association relationship may be established between the first PDU session of the first terminal device and the second PDU session of the second terminal device. For example, service data can be transferred between PDU sessions having an association relationship, and service data of the first PDU session can be transferred to the second PDU session, or service data of the second PDU session can be transferred to the first PDU session. However, regardless of the transfer, both the first PDU session and the second PDU session are established PDU sessions. During media transfer, a session does not need to be established before the transfer, but the transfer may be directly performed. Therefore, a service interruption time period taken in a media transfer process is reduced, and even a service does not need to be interrupted in the media transfer process. This improves service transmission quality and improves user experience.

With reference to the first aspect, in a first optional implementation of the first aspect, the first message includes a first parameter, and the first parameter indicates that the first PDU session that the first terminal device requests to establish is a PDU session having an association relationship. For example, the first message may implicitly indicate, by including the identifier of the second terminal device and the identifier of the second PDU session, to establish the association relationship between the first PDU session and the second PDU session, or implicitly indicate that the first PDU session that the first terminal device requests to establish is a PDU session having an association relationship. Alternatively, the first message may further include a first parameter, and the first parameter may explicitly indicate that the first PDU session that the first terminal device requests to establish is a PDU session having an association relationship, so that an indication manner is clearer.

With reference to the first aspect or the first optional implementation of the first aspect, in a second optional implementation of the first aspect, the second message further includes a second parameter, the second parameter indicates a manner of performing data processing on a PDU session, the manner of performing data processing includes transferring service data between the first PDU session and the second PDU session, or transmitting service data in the first PDU session and the second PDU session, and data processing can be performed between PDU sessions having an association relationship. A network may send the second parameter to the first terminal device, so that the first terminal device may determine a service data processing manner that can be supported by the first PDU session.

With reference to the first aspect, the first optional implementation of the first aspect, or the second optional implementation of the first aspect, in a third optional implementation of the first aspect, the second message includes QoS flow information that is configured by the second network device for the first terminal device and that is used to transmit a first service. For example, the first terminal device can process the service data in the process of establishing the first PDU session, for example, transfer the service data from the second PDU session to the first PDU session, or transmit the service data in the first PDU session and the second PDU session. In this case, if the service data is to be transmitted in the first PDU session, the second network device may configure, for the first terminal device, the QoS flow information transmitting the first service, and may send the QoS flow information to the first terminal device by using the second message. In this manner, the PDU session establishment process and the service data processing process may be synchronously completed, so that execution steps can be reduced, and service data processing efficiency can be improved.

With reference to the first aspect, the first optional implementation of the first aspect, or the second optional implementation of the first aspect, in a fourth optional implementation of the first aspect, the method further includes: receiving a third message from the first network device, where the third message includes QoS flow information that is configured by the second network device for the first terminal device and that is used to transmit the first service. For example, the first terminal device may process the service data after the first PDU session is established. In this case, after the first PDU session is established, the second network device sends, to the first terminal device by using the third message, the QoS flow information transmitting the first service. A processing procedure in this manner can be better compatible with an existing procedure such as PDU session establishment.

With reference to the first aspect or any one of the first optional implementation of the first aspect to the fourth optional implementation of the first aspect, in a fifth optional implementation of the first aspect, the method further includes: sending information about the first service to the second network device, where the information about the first service includes an identifier of the first service and/or packet information for describing a data stream of the first service. The first terminal device may request to process the service data. For example, if service data of the first service needs to be processed, the first terminal device may send the information about the first service to the second network device, so that the second network device may process the service data of the first service.

According to a second aspect, a second communication method is provided. The method may be performed by a terminal device, may be performed by a larger device including a terminal device, or may be performed by a chip system or another function module. The chip system or the function module can implement a function of a terminal device. The chip system or the function module is, for example, disposed in the terminal device. The terminal device is, for example, referred to as a second terminal device. The method includes: sending a sixth message to a first network device, where the sixth message is used to request to establish a second PDU session for the second terminal device, the sixth message includes a first parameter, and the first parameter indicates that the second PDU session that the second terminal device requests to establish is a PDU session having an association relationship and/or is used to select a second network device; and receiving an eighth message from the first network device, where the eighth message includes information for accepting the establishment of the second PDU session.

When establishing the second PDU session, the second terminal device may establish the second PDU session as a PDU session having an association relationship, so that an association relationship may be established between the first PDU session of the first terminal device and the second PDU session of the second terminal device. For example, service data can be transferred between PDU sessions having an association relationship, and service data of the first PDU session can be transferred to the second PDU session, or service data of the second PDU session can be transferred to the first PDU session. However, regardless of the transfer, both the first PDU session and the second PDU session are established PDU sessions. During media transfer, a session does not need to be established before the transfer, but the transfer may be directly performed. Therefore, a service interruption time period taken in a media transfer process is reduced, and even a service does not need to be interrupted in the media transfer process. This improves service transmission quality and improves user experience.

With reference to the second aspect, in a first optional implementation of the second aspect, the eighth message further includes a second parameter, the second parameter indicates a manner of performing data processing on a PDU session, the manner of performing data processing includes transferring service data between the second PDU session and a PDU session of another terminal device, or transmitting service data in the second PDU session and a PDU session of another terminal device, and there is an association relationship between the PDU session of the another terminal device and the second PDU session, and data processing can be performed between PDU sessions having an association relationship. A network may send the second parameter to the second terminal device, so that the second terminal device may determine a service data processing manner that can be supported by the second PDU session. Because there is the association relationship between the first PDU session and the second PDU session, the second parameter sent by the network to the first terminal device and the second parameter sent by the network to the second terminal device may be a same parameter.

With reference to the second aspect or the first optional implementation of the second aspect, in a second optional implementation of the second aspect, the method further includes: sending information about a first service to the second network device, where the information about the first service includes an identifier of the first service and/or packet information for describing a data stream of the first service. The first terminal device may request to process the service data, and the second terminal device may also request to process the service data. For example, if service data of the first service needs to be processed, the second terminal device may send the information about the first service to the second network device, so that the second network device may process the service data of the first service.

According to a third aspect, a third communication method is provided. The method may be performed by a first network device, may be performed by a larger device including a first network device, or may be performed by a chip system or another function module. The chip system or the function module can implement a function of a first network device. The chip system or the function module is, for example, disposed in the first network device. The first network device is, for example, a core network device, for example, an AMF, and may be referred to as a first AMF, or the first network device may be another device. The method includes: receiving a first message, where the first message is used to request to establish a first PDU session for a first terminal device, the first message further includes an identifier of a second terminal device and an identifier of a second PDU session, and the second PDU session is a PDU session of the second terminal device; and selecting a second network device for the first PDU session based on the identifier of the second terminal device and the identifier of the second PDU session, where the second network device is a network device serving the second PDU session.

According to a fourth aspect, a fourth communication method is provided. The method may be performed by a second network device, may be performed by a larger device including a second network device, or may be performed by a chip system or another function module. The chip system or the function module can implement a function of a second network device. The chip system or the function module is, for example, disposed in the second network device. The second network device is, for example, a core network device, for example, an SMF, or the second network device may be another device. The method includes: receiving a fifth message from a first network device, where the fifth message is used to request to establish a first PDU session having an association relationship for a first terminal device, the fifth message further includes an identifier of a second terminal device and an identifier of a second PDU session, the second PDU session is a PDU session of the second terminal device, and the fifth message indicates that an association relationship is established between the first PDU session and the second PDU session; and sending, to the first terminal device, a message used to accept the establishment of the first PDU session.

According to a fifth aspect, a fifth communication method is provided. The method may be performed by a fourth network device, may be performed by a larger device including a fourth network device, or may be performed by a chip system or another function module. The chip system or the function module can implement a function of a fourth network device. The chip system or the function module is, for example, disposed in the fourth network device. The fourth network device is, for example, a core network device, for example, an UPF, or the fourth network device may be another device. The method includes: receiving a ninth message from a second network device, where the ninth message is used to request to establish an N4 session and perform allocation on a first tunnel, the first tunnel is associated with a first QoS flow, the N4 session is associated with a second PDU session, the first QoS flow is associated with the second PDU session, and the first QoS flow is used to transmit a data stream of a first service; and receiving a tenth message from the second network device, where the tenth message is used to modify the N4 session and perform allocation on a second tunnel. The second tunnel is associated with the first QoS flow, the tenth message further indicates to transfer data between different terminal devices through the first tunnel and the second tunnel, or send same data to different terminal devices, where the N4 session is further associated with a first PDU session, and the first QoS flow is further associated with the first PDU session. Alternatively, the second tunnel is associated with a second QoS flow, the tenth message further indicates to transfer data between different terminal devices by using the first QoS flow and the second QoS flow, or send same data to different terminal devices, where the N4 session is further associated with a first PDU session, the first QoS flow is associated with the second PDU session, the second QoS flow is associated with the first PDU session, and the first QoS flow and the second QoS flow are used to transmit the data stream of the first service.

According to a sixth aspect, a sixth communication method is provided. The method includes: A first network device receives a first message, where the first message is used to request to establish a first PDU session for a first terminal device, the first message further includes an identifier of a second terminal device and an identifier of a second PDU session, and the second PDU session is a PDU session of the second terminal device. The first network device selects a second network device for the first PDU session based on the identifier of the second terminal device and the identifier of the second PDU session, and sends a fifth message to the second network device, where the second network device is a network device serving the second PDU session, the fifth message is used to request to establish, for the first terminal device, the first PDU session having an association relationship, the fifth message further includes the identifier of the second terminal device and the identifier of the second PDU session, and the fifth message indicates to establish an association relationship between the first PDU session and the second PDU session. The second network device sends a ninth message to a fourth network device, where the ninth message is used to request to establish an N4 session and perform allocation on a first tunnel, the first tunnel is associated with a first QoS flow, the N4 session is associated with the second PDU session, the first QoS flow is associated with the second PDU session, and the first QoS flow is used to transmit a data stream of a first service. The second network device sends, to the first terminal device, a message used to accept the establishment of the first PDU session.

With reference to the sixth aspect, in a first optional implementation of the sixth aspect, the second network device sends a tenth message to the fourth network device, where the tenth message is used to modify the N4 session and perform allocation on a second tunnel. The second tunnel is associated with the first QoS flow, the tenth message further indicates to transfer data between different terminal devices through the first tunnel and the second tunnel, or send same data to different terminal devices, where the N4 session is further associated with the first PDU session, and the first QoS flow is further associated with the first PDU session. Alternatively, the second tunnel is associated with a second QoS flow, the tenth message further indicates to transfer data between different terminal devices by using the first QoS flow and the second QoS flow, or send same data to different terminal devices, where the N4 session is further associated with the first PDU session, the first QoS flow is associated with the second PDU session, the second QoS flow is associated with the first PDU session, and the first QoS flow and the second QoS flow are used to transmit the data stream of the first service.

For technical effects brought by any one of the third aspect to the sixth aspect, refer to descriptions of the technical effects of the first aspect and/or the second aspect.

According to a seventh aspect, a communication apparatus is provided. The communication apparatus may be the first terminal device according to any one of the first aspect to the sixth aspect. The communication apparatus has a function of the first terminal device. The communication apparatus is, for example, the first terminal device, or a function module in the first terminal device, for example, a baseband apparatus or a chip system. Alternatively, the communication apparatus may be the second terminal device according to any one of the first aspect to the sixth aspect. The communication apparatus has a function of the second terminal device. The communication apparatus is, for example, the second terminal device, or a function module in the second terminal device, for example, a baseband apparatus or a chip system.

In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be one function module, and the function module is referred to as the transceiver unit. The function module can implement the sending function and the receiving function. Alternatively, the sending unit and the receiving unit may be different function modules, and the transceiver unit is a collective term for the function modules.

In an optional implementation, the communication apparatus further includes a storage unit. The processing unit is configured to: be coupled to the storage unit, and execute a program or instructions in the storage unit, to enable the communication apparatus to perform a function of the first terminal device or the second terminal device according to any one of the first aspect to the sixth aspect.

According to an eighth aspect, a communication apparatus is provided. The communication apparatus may be the first network device according to any one of the first aspect to the sixth aspect. The communication apparatus has a function of the first network device. The communication apparatus is, for example, the first network device, or a function module in the first network device, for example, a baseband apparatus or a chip system. Alternatively, the communication apparatus may be the second network device according to any one of the first aspect to the sixth aspect. The communication apparatus has a function of the second network device. The communication apparatus is, for example, the second network device, or a function module in the second network device, for example, a baseband apparatus or a chip system. Alternatively, the communication apparatus may be the fourth network device according to any one of the first aspect to the sixth aspect. The communication apparatus has a function of the fourth network device. The communication apparatus is, for example, the fourth network device, or a function module in the fourth network device, for example, a baseband apparatus or a chip system.

In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be one function module, and the function module is referred to as the transceiver unit. The function module can implement the sending function and the receiving function. Alternatively, the sending unit and the receiving unit may be different function modules, and the transceiver unit is a collective term for the function modules.

In an optional implementation, the communication apparatus further includes a storage unit. The processing unit is configured to: be coupled to the storage unit, and execute a program or instructions in the storage unit, to enable the communication apparatus to perform a function of the first network device, the second network device, or the fourth network device according to any one of the first aspect to the sixth aspect.

According to a ninth aspect, a computer-readable storage medium is provided. The computer-readable storage medium is configured to store a computer program or instructions. When the computer program or the instructions are run, the method performed by the first terminal device, the second terminal device, the first network device, the second network device, or the fourth network device in the foregoing aspects is implemented.

According to a tenth aspect, a computer program product including instructions is provided. When the computer program product runs on a computer, the methods in the foregoing aspects are implemented.

According to an eleventh aspect, an apparatus is provided, including one or more units configured to perform the method according to any embodiment of this application.

### BRIEF DESCRIPTION OF DRAWINGS

FIG. 1 is a schematic diagram of an application scenario according to an embodiment of this application;
FIG. 2A and FIG. 2B are a flowchart of a first communication method according to an embodiment of this application;
FIG. 3A and FIG. 3B are a flowchart of a second communication method according to an embodiment of this application;
FIG. 4A and FIG. 4B are a flowchart of a third communication method according to an embodiment of this application;
FIG. 5A and FIG. 5B are two schematic diagrams of a QoS flow between UE and a UPF according to an embodiment of this application;
FIG. 6A to FIG. 6C are a flowchart of a fourth communication method according to an embodiment of this application;
FIG. 7 is a schematic diagram of an apparatus according to an embodiment of this application; and
FIG. 8 is a schematic diagram of another apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

The following describes some terms or concepts in embodiments of this application, to facilitate understanding by a person skilled in the art.

In embodiments of this application, a terminal device is a device with a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect a person, an object, a machine, and the like, and may be widely used in various scenarios, for example, including but not limited to the following scenarios: cellular communication, device-to-device (device-to-device, D2D) communication, vehicle-to-everything (vehicle-to-everything, V2X), machine-to-machine/machine-type communication (machine-to-machine/machine-type communication, M2M/MTC), an Internet of things (Internet of things, IoT), virtual reality (virtual reality, VR), augmented reality (augmented reality, AR), industrial control (industrial control), self-driving (self-driving), remote medical (remote medical), a smart grid (smart grid), smart furniture, a smart office, a smart wearable, smart transportation, a smart city (smart city), an unmanned aerial vehicle, and a robot. Sometimes, the terminal device may be referred to as user equipment (user equipment, UE), a terminal, an access station, a UE station, a remote station, a wireless communication device, a user apparatus, or the like. For ease of description, in embodiments of this application, an example in which the terminal device is UE is used for description.

In embodiments of this application, a network device includes, for example, an access network device and/or a core network device. The access network device is a device having a wireless transceiver function, and is configured to communicate with the terminal device. The access network device includes but is not limited to a base station (BTS, NodeB, eNodeB/eNB, or gNodeB/gNB) and a transmission reception point (transmission reception point, TRP) in a communication system, a base station that subsequently evolves in the 3rd generation partnership project (3rd generation partnership project, 3GPP), an access node in a wireless fidelity (wireless fidelity, Wi-Fi) system, a wireless relay node, and a wireless backhaul node. The base station may be a macro base station, a micro base station, a pico base station, a small cell, a relay station, or the like. A plurality of base stations may support the foregoing networks using a same access technology, or may support the foregoing networks using different access technologies. The base station may include one or more co-site or non-co-site transmission reception points. The network device may alternatively be a radio controller, a central unit (central unit, CU), and/or a distributed unit (distributed unit, DU) in a cloud radio access network (cloud radio access network, CRAN) scenario. Alternatively, the network device may be a server, a wearable device, or the like. For example, a network device in the vehicle-to-everything (vehicle-to-everything, V2X) technology may be a road side unit (road side unit, RSU). An example in which the access network device is a base station is used below for description. The base station may communicate with a terminal device, or may communicate with a terminal device via a relay station. The terminal device may communicate with a plurality of base stations in different access technologies. The core network device is configured to implement a mobility management function, a data processing function, a session management function, a policy and charging function, and the like. Names of devices that implement core network functions in systems using different access technologies may be different. This is not limited in embodiments of this application. A 5G system is used as an example, and the core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a network device function may be a network device, or may be an apparatus that can support a network device in implementing the function, for example, a chip system. The apparatus may be installed in the network device. In the technical solutions provided in embodiments of this application, the apparatus configured to implement the network device function is used as an example of the network device to describe the technical solutions provided in embodiments of this application.

In embodiments of this application, unless otherwise specified, a quantity of nouns indicates "a singular noun or a plural noun", namely, "one or more". "At least one" means one or more, and "a plurality of" means two or more. The term "and/or" describes an association relationship between associated objects and represents that three relationships may exist. For example, A and/or B may represent the following three cases: Only A exists, both A and B exist, and only B exists. A and B may be in a singular or plural form. The character "/" generally indicates an "or" relationship between associated objects. For example, A/B indicates A or B. "At least one of the following items (pieces)" or a similar expression thereof indicates any combination of these items, including a single item (piece) or any combination of a plurality of items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are intended to distinguish between a plurality of objects, but not to limit a size, content, an order, a time sequence, a priority, or importance of the plurality of objects. For example, a first message and a second message may be a same message, or may be different messages. In addition, this name does not indicate that the two messages are different in size, content, priority, importance, or the like. In addition, numbers of steps in embodiments described in this application are merely intended to distinguish between different steps, but not to limit a sequence of the steps. For example, step S201 may occur before step S202, or may occur after step S202, or may occur at the same time with step S202.

Currently, with development of electronic technologies, a user may have a plurality of electronic devices, such as a mobile phone, a PAD, and a smart television. When using the plurality of electronic devices, the user may need to transfer media from one device to another device. For example, the user watches a video on a website by using a mobile phone on the way home, turns on a smart television after returning to home, and logs in to a same account by using the smart television, to continue to watch the video. This is a process of transferring media from one device to another device. In this case, when the user continues to watch the video by using the smart television, the smart television needs to re-establish a connection to an application server of the video before starting to play the video. In other words, in this media transfer process, when a next device is used to continue to receive media information, the next device needs to re-establish a connection to the application server. This causes a long service interruption time period.

For another example, the user performs wireless projection to a PC by using a PAD, so that the PC displays content on the PAD. This is also a process of transferring media from one device to another device. However, during wireless projection, the PAD cannot exit halfway, or be moved to a region outside a wireless fidelity (wireless fidelity, Wi-Fi) coverage. Otherwise, wireless projection will be interrupted, and the PC cannot continue to display the content on the PAD. In other words, in this media transfer process, an intermediate device (for example, the PAD) needs to participate in the entire process, which poses a very strict requirement on device binding.

In view of this, the technical solutions in embodiments of this application are provided. In this embodiment of this application, an association relationship may be established between a first PDU session of a first terminal device and a second PDU session of a second terminal device. For example, service data can be transferred between PDU sessions having an association relationship, and service data of the first PDU session can be transferred to the second PDU session, or service data of the second PDU session can be transferred to the first PDU session. However, regardless of the transfer, both the first PDU session and the second PDU session are established PDU sessions. During media transfer, a session does not need to be established before the transfer, but the transfer may be directly performed. Therefore, a service interruption time period taken in a media transfer process is reduced, and even a service does not need to be interrupted in the media transfer process. This improves service transmission quality and improves user experience. Alternatively, during media transfer, because service data has been transferred to another PDU session, a previous PDU session (in other words, a terminal device corresponding to the previous PDU session) no longer participates in transmission of the service data. Therefore, the previous PDU session (in other words, the terminal device corresponding to the previous PDU session) may exit, and a requirement on a device binding degree is also reduced, so that an application manner is more flexible.

The technical solutions provided in embodiments of this application may be applied to a 4th generation (4th generation, 4G) mobile communication technology system, for example, a long term evolution (long term evolution, LTE) system, may be applied to a 5th generation (5th generation, 5G) mobile communication technology system, for example, a new radio (new radio, NR) system, or may be applied to a next generation mobile communication system or another similar communication system. This is not specifically limited. In addition, because the technical solutions provided in embodiments of this application relate to media transfer between UEs, the technical solutions may be applied to a device-to-device (device-to-device, D2D) scenario, for example, an NR-D2D scenario, or may be applied to a vehicle-to-everything (vehicle-to-everything, V2X) scenario, for example, an NR-V2X scenario. For example, the technical solutions may be applied to an Internet of vehicles, for example, V2X or vehicle-to-vehicle (vehicle-to-vehicle, V2V), or may be applied to a field, for example, an intelligent driving field, an assisted driving field, or a field of intelligent connected vehicles. For another example, the technical solutions may be applied to a scenario, for example, an extended reality (extended reality, XR) scenario or a projection scenario.

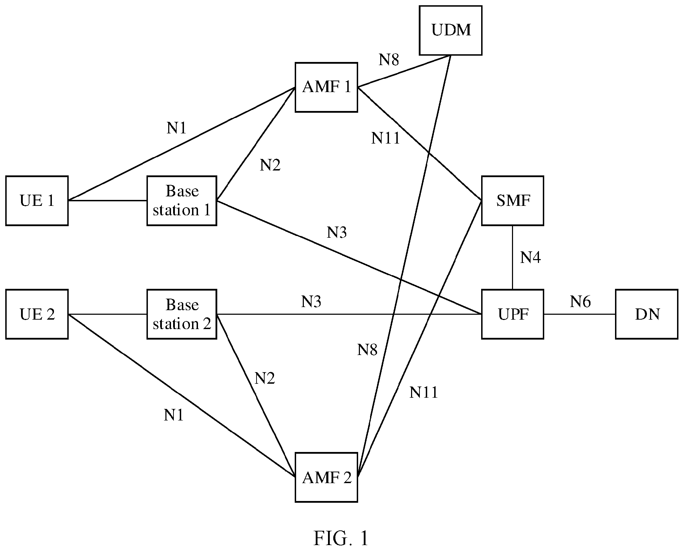

FIG. 1 is a schematic diagram of an application scenario in which a 5G system is used as an example according to an embodiment of this application. UE, a base station, an AMF, an SMF, a UPF, unified data management (unified data management, UDM), and a data network (data network, DN) are included in FIG. 1. A connection line in FIG. 1 indicates that two network elements can communicate with each other. In addition, "Ni (i=1, 2, 3, 4, 6, 8, 11)" in FIG. 1 represents an interface between two network elements. For example, N1 represents an interface between the UE and the AMF, N2 represents an interface between the base station (or an access network or an access network device) and the AMF, and N4 represents an interface between the SMF and the UPF.

The AMF is a core network entity in a 5th generation (5th generation, 5G) mobile communication technology, and is configured to manage a registration process, a mobility process, reachability, and the like of the UE.

The SMF is a 5G core network entity, and is configured to manage a PDU session of the UE. The management includes PDU session establishment, modification, and deletion processes, and further includes a quality of service (quality of service, QoS) flow (flow) establishment, modification, and deletion processes in the PDU session.

The UDM is a 5G core network entity, and is configured to manage subscription data of a user. A function of the UDM is similar to that of a home subscriber server (home subscriber server, HSS) in a 4th generation (4th generation, 4G) mobile communication technology. The UDM in FIG. 1 may also be understood as a combination of functions of the UDM and the HSS.

The UPF is a 5G core network entity, and is configured to send and receive user plane data. For example, after receiving data from the DN, a core network sends the data to a gNB through a tunnel between the UPF and the base station (for example, the gNB). Alternatively, after receiving data from a gNB through a tunnel between the UPF and the gNB, the UPF sends the data to the DN.

The base station is, for example, a gNB, and the gNB is a 5G base station. The gNB communicates with the UE through an air interface, and performs data receiving and sending with the UPF through the tunnel.

The DN is a data network. For example, the DN may be the Internet (Internet) or an Internet protocol multimedia subsystem (Internet protocol multimedia subsystem, IMS) network. An application server may be a part of the DN, and the application server may provide a corresponding application (application, APP), or in other words, the application server may provide corresponding service data.

The following describes a method provided in embodiments of this application with reference to the accompanying drawings. In the accompanying drawings corresponding to embodiments of this application, all optional steps are indicated by dashed lines. In embodiments of this application, a first network device is, for example, an AMF, or may be another device; a second network device is, for example, an SMF, or may be another device; a third network device is, for example, an AMF, or may be another device; and a fourth network device is, for example, a UPF, or may be another device. In the following description process, an example in which the first network device is an AMF (for example, referred to as a first AMF), the second network device is an SMF, the third network device is an AMF (for example, referred to as a second AMF), and the fourth network device is a UPF is used. In embodiments of this application, a "session" is, for example, a "PDU session", or may be a session of another type. In the following description process, a "PDU session" is used as an example.

The methods provided in embodiments of this application may be applied to the network architecture shown in FIG. 1. For example, in the methods provided in embodiments of this application, first UE is UE 1 in FIG. 1, second UE is UE 2 in FIG. 1, a first AMF is an AMF 1 in FIG. 1, a second AMF is an AMF 2 in FIG. 1, a first access network device is a base station 1 in FIG. 1, a second access network device is a base station 2 in FIG. 1, an SMF is the SMF in FIG. 1, and a UPF is the UPF in FIG. 1.

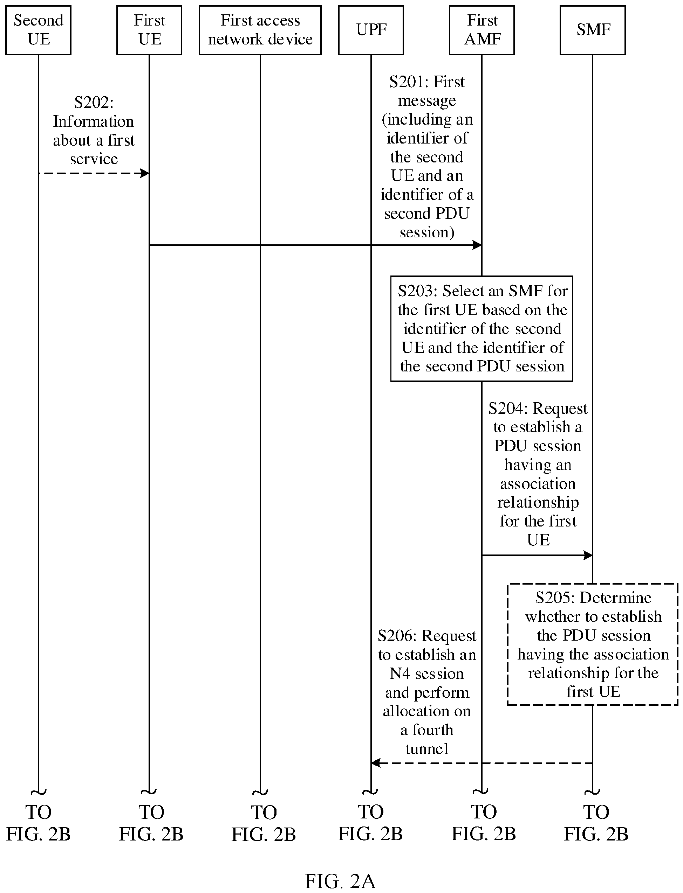

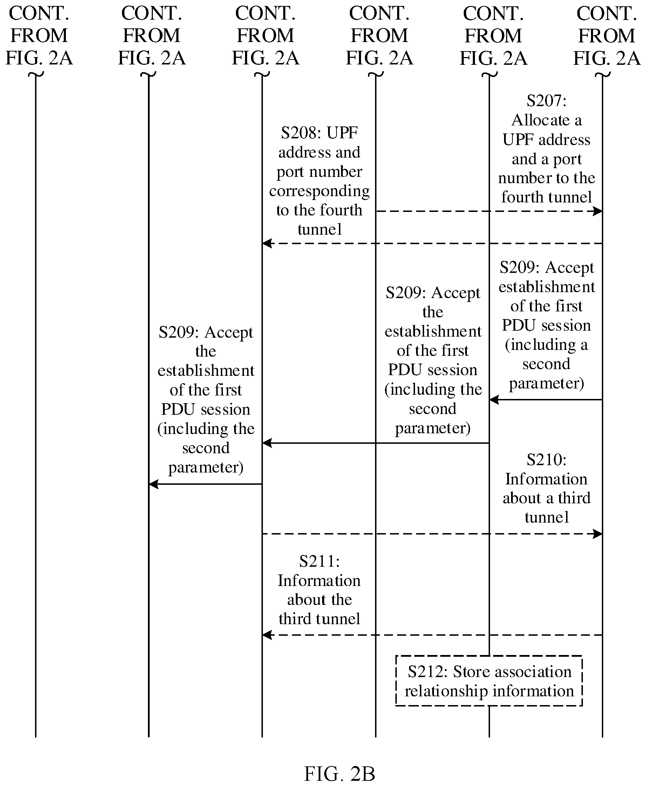

An embodiment of this application provides a first communication method. FIG. 2A and FIG. 2B are a flowchart of the method.

S201: First UE sends a first message, where the first message may be used to request to establish a PDU session for the first UE, to be distinguished from another PDU session, for example, the PDU session is referred to as a first PDU session, and the first message is, for example, a non-access stratum (non-access stratum, NAS) message, or may be another message.

For example, if the first UE sends the first message to a first AMF, the first AMF receives the first message from the first UE. The first AMF is an AMF serving the first UE. This is used as an example in FIG. 2A and FIG. 2B. Alternatively, the first UE sends a message to an SMF, and the message sent by the UE to the SMF needs to be forwarded by an AMF. Therefore, the first AMF also receives the first message from the first UE. The SMF is an SMF serving the first UE.

For example, the first message includes an identifier of second UE and an identifier of a second PDU session. The second PDU session is established, and the second PDU session is a PDU session of the second UE. Optionally, the first message further includes a session establishment request message, and the session establishment request message may be used to request to establish a session. For example, the first message is a NAS message. The NAS message may include an N1 SM container (container). The N1 SM container may be considered as a PDU session establishment request (PDU session establishment request) message, and is used to request to establish a PDU session. After receiving the first message, the first AMF does not parse the N1 SM container, but sends the N1 SM container to the SMF. Optionally, that the first message includes the identifier of the second UE and the identifier of the second PDU session means that the N1 SM container includes the identifier of the second UE and the identifier of the second PDU session. In this case, the SMF can obtain the identifier of the second UE and the identifier of the second PDU session, but the first AMF cannot obtain the identifier of the second UE and the identifier of the second PDU session. Alternatively, that the first message includes the identifier of the second UE and the identifier of the second PDU session means that the N1 SM container does not include the identifier of the second UE and the identifier of the second PDU session, but fields other than the N1 SM container in the first message carry the identifier of the second UE and the identifier of the second PDU session. In this case, the first AMF can obtain the identifier of the second UE and the identifier of the second PDU session, but the SMF cannot obtain the identifier of the second UE and the identifier of the second PDU session by using the N1 SM container. Subsequently, in S204, the AMF may send the identifier of the second UE and the identifier of the second PDU session to the SMF. Alternatively, that the first message includes the identifier of the second UE and the identifier of the second PDU session means that the N1 SM container includes the identifier of the second UE and the identifier of the second PDU session, and a field other than the N1 SM container in the first message also carries the identifier of the second UE and the identifier of the second PDU session. In this case, the first AMF can obtain the identifier of the second UE and the identifier of the second PDU session, and the SMF can also obtain the identifier of the second UE and the identifier of the second PDU session.

The identifier, included in the first message, of the second UE is, for example, a first identifier of the second UE, and the first identifier of the second UE is, for example, a SG-globally unique temporary UE identity (globally unique temporary UE identity, GUTI) or a mobile subscriber international integrated services digital network/public switched telephone network number (mobile subscriber international ISDN/PSTN number, MSISDN) of the second UE. The identifier of the second PDU session is, for example, an ID of the second PDU session.

If the first AMF determines that the first message includes the first identifier of the second UE and the identifier of the second PDU session, the first AMF may select an SMF for the first UE or select an SMF for the first PDU session based on the first identifier of the second UE and the identifier of the second PDU session, and/or may establish an association relationship between the first PDU session and the second PDU session based on the first identifier of the second UE and the identifier of the second PDU session. For example, the first AMF may select, for the first PDU session based on the first identifier of the second UE and the identifier of the second PDU session, an SMF serving the second PDU session, so that an SMF serving the first PDU session and the SMF serving the second PDU session are a same SMF. Service data needs to be transferred between PDU sessions, a PDU session modification procedure needs to be initiated, and generally, the PDU session modification procedure is initiated by the SMF. Therefore, if PDU sessions having an association relationship are served by a same SMF, the SMF can more conveniently initiate a PDU session modification procedure. This simplifies a process of transferring service data between the PDU sessions. In addition, the SMF may further allocate an IP address to the PDU sessions. If a same SMF serves the PDU sessions having the association relationship, optionally, the SMF may allocate a same IP address to the PDU sessions having the association relationship, so that the PDU sessions can be associated by using the IP address.

If the SMF determines that the first UE carries the identifier of the second UE (where for the SMF, a second identifier of the second UE may be obtained, and will be described below) and the identifier of the second PDU session when requesting to establish the PDU session, the SMF may establish the association relationship between the first PDU session and the second PDU session based on the identifier of the second UE and the identifier of the second PDU session.

Optionally, the first message further includes a first parameter. The first parameter may indicate that the first UE requests to establish a PDU session having an association relationship, or indicate that a PDU session (for example, the first PDU session) that the first UE requests to establish is a PDU session having an association relationship. For example, the first parameter may be a request type (request type) included in the first message. If a value of the request type is a multi-UE PDU request (multi-UE PDU request), it indicates that the first parameter indicates that the PDU session that the first UE requests to establish is the PDU session having the association relationship. Alternatively, the first parameter may be implemented based on another existing parameter in the first message, or the first parameter may be a parameter newly defined in the first message. Because the first message further includes the first identifier of the second UE and the identifier of the second PDU session, the first AMF and/or the SMF can determine that the first UE requests to establish the association relationship between the first PDU session and the second PDU session.

Optionally, the first message further includes an identifier of the first UE. For example, the first message includes a first identifier of the first UE. The first identifier of the first UE includes, for example, a 5G-GUTI or an MSISDN of the first UE.

In addition, optionally, that the first UE performs S201, for example, is triggered by the second UE. For example, if the second UE determines that the service data needs to be transferred, the second UE may trigger the first UE, so that the first UE performs S201, to establish the first PDU session. In other words, before S201, optionally, the method further includes S202: The second UE sends information about a first service to the first UE, and correspondingly, the second UE receives the information about the first service from the first UE. The first service is a service that needs to be transferred from the second UE to a target UE, and the target UE includes, for example, the first UE, or includes the first UE and the second UE. In other words, the first service is a service that needs to be transferred from the second PDU session to a target PDU session, and the target PDU session includes, for example, the first PDU session, or includes the first PDU session and the second PDU session. After receiving the information about the first service, the second UE can determine that the first service needs to be transferred between PDU sessions. In this case, if the second UE has not established a PDU session for the first service, the first UE may perform S201, to establish the first PDU session to transmit the first service. In S202, in addition to sending the information about the first service to the first UE, the second UE may further send the identifier of the second UE (for example, the first identifier of the second UE) and the identifier of the second PDU session to the first UE, so that the first UE may send the first identifier of the second UE and the identifier of the second PDU session by using the first message.

The information about the first service includes, for example, an identifier of the first service, and/or includes packet information for describing a data stream of the first service. The identifier of the first service is, for example, the ID of the first service, and the packet information for describing the data stream of the first service includes, for example, one or more of IP packet header information, triplet information, or quintuple information of the first service. The triplet information of the first service includes, for example, a target IP (target IP) address, a target port (target port) number, and a transport layer protocol that correspond to the first service. The quintuple information of the first service includes, for example, a source IP (source IP) address, the target IP address, a source port (source port) number, the target port number, and the transport layer protocol that are of the first service. The transport layer protocol is, for example, a transmission control protocol (transmission control protocol, TCP) or a user datagram protocol (user datagram protocol, UDP).

Optionally, in S202, the second UE may further send a connection parameter to the first UE. Correspondingly, the first UE receives the connection parameter from the second UE. For example, the second UE sends the information about the first service and the connection parameter to the first UE by using one message, or the second UE may separately send the information about the first service and the connection parameter to the first UE by using different messages. The connection parameter is, for example, a parameter that corresponds to the first service (or corresponds to the second PDU session) and that is used to connect to a network. For example, the connection parameter includes parameters such as network slice information and/or a data network name (data network name, DNN) that correspond/corresponds to the second PDU session.

Alternatively, the first UE may determine the connection parameter by itself. For example, if the first UE may determine the connection parameter based on the information about the first service, the second UE does not need to send the connection parameter to the first UE. Alternatively, the network (for example, a first network device and/or a second network device) may set a connection parameter of the first PDU session based on the second PDU session. In this case, the second UE may not need to send the connection parameter to the first UE, and the first UE does not need to send the connection parameter to the network either.

The first message is used to request to establish the PDU session for the first UE, for example, to request to establish a new first PDU session, or may be used to request to re-establish the first PDU session. If the first message is used to request to re-establish the first PDU session, it indicates that the first PDU session has been established before, and a current process is a re-establishment process. Alternatively, the first message may be used to request to modify the first PDU session. In this case, it also indicates that the first PDU session has been established before, and a current process is a modification process. If the first PDU session has been established before, the previously established first PDU session may be a PDU session having an association relationship, or may be a PDU session having no association relationship, or may be a common PDU session. In this embodiment of this application, an example in which the first message requests to establish the PDU session for the first UE is used.

S203: The first AMF selects the SMF for the first PDU session based on the identifier of the second UE (for example, the first identifier of the second UE) and the identifier of the second PDU session, where the SMF is, for example, the SMF serving the second PDU session.

Optionally, after receiving the first message, the first AMF may obtain subscription information of the first UE, to determine, based on the subscription information of the first UE, whether the first UE supports establishment of a PDU session having an association relationship. For example, if the subscription information of the first UE includes one or more of subscription information indicating that the first UE establishes the PDU session having the association relationship (or subscription information indicating that the first UE establishes the multi-UE PDU request), personal network subscription information, or virtual group subscription information, the first AMF determines that the PDU session having the association relationship can be established for the first UE. However, if the subscription information of the first UE does not include the foregoing items, the first AMF determines that the first UE does not support the establishment of the PDU session having the association relationship, or the first AMF determines that the PDU session having the association relationship cannot be established for the first UE. In this case, the first AMF may send a reject message to the first UE, to reject the establishment of the PDU session having the association relationship for the first UE; or the first AMF may modify a PDU session that is requested to be established based on a first request to a PDU session having no association relationship. For example, the first AMF modifies a value of a request type included in the first request to a non-multi-UE PDU request, for example, to an initial request (initial request).

In addition, if the first AMF determines that the second PDU session is a PDU session having an association relationship, for example, a value of a request type of the second PDU session is a multi-UE PDU request, the first AMF may perform S202 (or if the first AMF determines that the second PDU session is a PDU session having an association relationship, and the first AMF determines that the first UE supports establishment of a PDU session having an association relationship, the first AMF may perform S202). However, if the first AMF determines that the second PDU session is not a PDU session having an association relationship, for example, the value of the request type of the second PDU session is not a multi-UE PDU request, the first AMF may reject a request of the first UE for establishing the PDU session, that is, reject the first message, or the first AMF may modify the first message, for example, modify a value of a request type included in the first message to a non-multi-UE PDU request, for example, to an initial request.

For example, the AMF serving the first UE is the first AMF, and an AMF serving the second UE is a second AMF. If the first AMF and the second AMF are a same AMF, the first AMF can determine an SMF serving the second PDU session. However, if the first AMF and the second AMF are different AMFs, the first AMF may send a fourth message to the second AMF, and the fourth message may be used to request to obtain information about an SMF serving the second PDU session. After receiving the fourth message, the second AMF may send, to the first AMF, an identifier of the SMF serving the second PDU session, so that after receiving the identifier of the SMF, the first AMF may select the SMF for the first PDU session.

S204: The first AMF sends a fifth message to the SMF, and correspondingly, the SMF receives the fifth message from the first AMF, where the fifth message may be used to request to establish the first PDU session having the association relationship for the first UE, and optionally, the fifth message includes the first parameter.

For example, the first AMF sends the fifth message to the SMF by invoking a service provided by the SMF. For example, the service provided by the SMF is a session update session management context request (Nsmf_PDUSession_UpdateSMContext Request) service, where Nsmf represents the service provided by the SMF, and "N" may be understood as a network function (network function). Services in the following may be understood in a similar manner. In addition, "SM" in the service is session management (session management, SM). After receiving Nsmf_PDUSession_UpdateSMContext Request from the first AMF, the SMF may further send a session update session management context response (Nsmf_PDUSession_UpdateSMContext Response) to the first AMF.

Optionally, the fifth message includes the identifier of the second UE and the identifier of the second PDU session, to indicate to establish the association relationship between the first PDU session and the second PDU session. The identifier, included in the fifth message, of the second UE is, for example, the second identifier of the second UE, and the second identifier of the second UE includes, for example, a subscription permanent identifier (subscription permanent identifier, SUPI) or an international mobile subscriber identity (international mobile subscriber identity, IMSI) of the second UE. The identifier, received by the first AMF, of the second UE may be the first identifier of the second UE. The first identifier of the second UE includes, for example, a 5G-GUTI or an MSISDN. The first AMF may map the 5G-GUTI or the MSISDN of the second UE to an SUPI or an IMSI, and then send the obtained SUPI or IMSI to the SMF.

Optionally, the fifth message may further include the identifier of the first UE. For example, the identifier, included in the fifth message, of the first UE is a second identifier of the first UE. The second identifier of the first UE may be an SUPI or an IMSI of the first UE. The first AMF maps the received 5G-GUTI or MSISDN of the first UE to an SUPI or an IMSI, and then sends the obtained SUPI or IMSI to the SMF.

S205: The SMF determines whether to establish the PDU session having the association relationship for the first UE.

After receiving the fifth message, the SMF may accept the establishment of the PDU session having the association relationship for the first UE, or may reject the establishment of the PDU session having the association relationship for the first UE. Optionally, after receiving the fifth message, the SMF may determine whether the first UE supports the establishment of the PDU session having the association relationship. For example, the SMF determines, based on the subscription information of the first UE, whether the first UE supports the establishment of the PDU session having the association relationship. For a determining manner, refer to the determining manner of the first AMF in S203.

If the SMF determines that the first UE supports the establishment of the PDU session having the association relationship, the SMF may establish the PDU session having the association relationship for the first UE. For example, the SMF allocates a first IP address to the first PDU session. Optionally, the first IP address is the same as a second IP address, and the second IP address is an IP address of the second PDU session. Two PDU sessions may be associated by setting IP addresses of the two PDU sessions to be the same. It may be understood that setting the IP addresses of the two PDU sessions to be the same is a manner of establishing an association relationship for the two PDU sessions. Alternatively, the SMF may not allocate, to the first PDU session, an IP address that is the same as the IP address of the second PDU session. In other words, the first IP address may be different from the second IP address. Even if the first IP address is different from the second IP address, network elements such as the SMF and the AMF can determine that there is an association relationship between the first PDU session and the second PDU session. If the first IP address is different from the second IP address, the association relationship between the first PDU session and the second PDU session may be implemented by performing a transport layer proxy function by a UPF. The content is described in the following embodiments.

However, if the SMF determines that the first UE does not support the establishment of the PDU session having the association relationship, or the SMF determines that the PDU session having the association relationship cannot be established for the first UE, the SMF rejects the establishment of the PDU session having the association relationship for the first UE. In this case, for example, the SMF does not need to perform subsequent steps, but may send a reject message to the first UE, to reject the establishment of the PDU session having the association relationship for the first UE. Alternatively, the SMF may modify a PDU session that is requested to be established based on the fifth message to a PDU session having no association relationship. For example, the SMF modifies a value of a request type included in the fifth message to a non-multi-UE PDU request, for example, to an initial request.

S206: The SMF sends an eleventh message to the UPF, and correspondingly, the UPF receives the eleventh message from the SMF, where the eleventh message may be used to request to establish an N4 session, and request to perform allocation on a fourth tunnel, the fourth tunnel is associated with a third QoS flow, the third QoS flow is used to transmit a data stream of the first service, and the third QoS flow is associated with the first PDU session.

The eleventh message is, for example, an N4 session modification request (N4 session modification request), or may be another message. The fourth tunnel is used to send and receive data between the UPF and an access network device, and is a core network tunnel (CN tunnel) corresponding to the first UE. That the UPF performs allocation on the fourth tunnel is, for example, that the UPF allocates a UPF address, a port number, and the like to the fourth tunnel. The fourth tunnel may be used by an access network device serving the first UE to send data of the first UE to the UPF.

It should be noted that, for PDU sessions (for example, the first PDU session and the second PDU session) having an association relationship, N4 sessions corresponding to the PDU sessions are the same. In other words, the UPF may establish, based on the same N4 session, tunnels with access network devices serving UEs of the PDU sessions. In this case, because the second PDU session is established, and the N4 session is established in the process of establishing the second PDU session, the UPF may not need to establish the N4 session again after receiving the eleventh message, but perform allocation on the fourth tunnel based on the N4 session.

S207: The UPF sends a twelfth message to the SMF, and correspondingly, the SMF receives the twelfth message from the UPF, where if the eleventh message, for example, is the N4 session modification request, the twelfth message is, for example, an N4 session modification response (N4 session modification response), that is, the twelfth message may be considered as a response to the fifth message.

The twelfth message may include information such as the UPF address and the port number that are allocated by the UPF to the fourth tunnel.

S208: The SMF sends, to the first access network device, the information such as the UPF address and the port number that correspond to the fourth tunnel, and the corresponding access network device receives the information such as the UPF address and the port number that correspond to the fourth tunnel. For example, the SMF may send the information such as the UPF address and the port number that correspond to the fourth tunnel to the first AMF, and then the first AMF sends the information such as the UPF address and the port number that correspond to the fourth tunnel to the first access network device. In this case, the first access network device receives, from the first AMF, the information such as the UPF address and the port number that correspond to the fourth tunnel. The first access network device is the access network device serving the first UE.

S209: The SMF sends, to the first UE, a message used to accept the establishment of the first PDU session, and correspondingly, the first UE receives, from the SMF, the message used to accept the establishment of the first PDU session, where the message includes, for example, PDU session establishment accept (PDU session establishment accept), and the PDU session establishment accept may indicate to accept the establishment of the first PDU session.

It should be noted that the SMF generally needs to forward the message to the UE by using the AMF. Therefore, the SMF may invoke a service provided by the first AMF, to send the PDU session establishment accept to the first AMF. The service is, for example, a communication N1N2 message transfer (Namf_Communication_N1N2MessageTransfer) service. Both N1 and N2 are names of interfaces, N1 is an interface between UE and an AMF, and N2 is an interface between an access network (AN) and the AMF. Namf_Communication_N1N2MessageTransfer means that the SMF needs to invoke a service provided by the AMF (for example, the first AMF), to send information to the UE and the access network (for example, the first access network device). After receiving the PDU session establishment accept, the first AMF sends a second message to the first UE. The second message may include the PDU session establishment accept. For example, the second message sent by the first AMF is an N2 message (N2 message), but the N2 message is sent to the first access network device, the N2 message includes the PDU session establishment accept, and the N2 message is, for example, an N2 PDU session request (N2 PDU session request). After receiving the N2 message, the first access network device sends the PDU session establishment accept to the UE based on an RRC message (RRC message), where the RRC message is, for example, access network specific resource setup (AN specific resource setup). The PDU session establishment accept may be included in a container, and Namf_Communication_N1N2MessageTransfer, the N2 PDU session request, and the AN specific resource setup each include the container.

Optionally, Namf_Communication_N1N2MessageTransfer sent by the SMF to the first AMF may further include first association indication information. The first association indication information may indicate that the first PDU session is established as a PDU session having an association relationship (for example, indicate that the first PDU session is established as a multi-UE PDU session). After receiving the first association indication information, the first AMF may store information indicating that the first PDU session is a PDU session having an association relationship (for example, store information indicating that the first PDU session is of a multi-UE PDU session type). In addition, the first AMF may further store association relationship information. The association relationship information indicates, for example, the association relationship between the first PDU session and the second PDU session.

Optionally, the SMF may further send a second parameter to the first UE, where the second parameter may indicate a manner of performing data processing in a PDU session, and data processing can be performed between PDU sessions having an association relationship. The manner of performing data processing in the PDU session includes, for example, transferring service data between the first PDU session and the second PDU session, or transmitting service data in the first PDU session and the second PDU session. For example, the second parameter may be represented as a multi-UE rule (multi-UE rule), or the second parameter may be included in a multi-UE rule. The second parameter may indicate, through switching (switching), to transfer the service data between the PDU sessions, and transmitting the service data in a plurality of PDU sessions may be understood as sharing the service data in the plurality of PDU sessions. The second parameter may be indicated through duplication (duplication). The second parameter may be included in a message used to accept the establishment of the first PDU session, or may be sent by using another message. If the SMF creates the first PDU session as a PDU session having no association relationship, the SMF may not need to send the second parameter to the first UE. The second parameter may be included in a message used to accept the establishment of the first PDU session. For example, the first AMF may send the second parameter to the first UE by using the second message. Alternatively, the SMF may send the second parameter by using another message. In this case, the first AMF may send the second parameter to the first UE by using the another message instead of the second message.

If the second parameter is received from the SMF, the UE may determine that the first PDU session is a PDU session having an association relationship. If the second parameter is not received from the SMF, the UE may determine that the first PDU session is a PDU session having no association relationship. Alternatively, if the SMF creates the first PDU session as a PDU session having an association relationship, the SMF may send second association indication information to the first UE in addition to sending the second parameter to the first UE. The second association indication information may indicate that the first PDU session is the PDU session having the association relationship. The UE may determine, based on the second association indication information, that the first PDU session is the PDU session having the association relationship. However, if the SMF creates the first PDU session as a PDU session having no association relationship, the SMF may not send second association indication information to the first UE in addition to not sending the second parameter to the first UE. If the first UE does not receive the second association indication information from the SMF, the first UE may determine that the first PDU session is the PDU session having no association relationship. Alternatively, if the SMF creates the first PDU session as a PDU session having no association relationship, the SMF may send second association indication information to the first UE in addition to not sending the second parameter to the first UE. The second association indication information may indicate that the first PDU session is the PDU session having no association relationship. The UE may determine, based on the second association indication information, that the first PDU session is the PDU session having no association relationship. However, if the SMF creates the first PDU session as a PDU session having an association relationship, the SMF may not send second association indication information to the first UE in addition to sending the second parameter to the first UE. If the first UE does not receive the second association indication information from the SMF, the first UE may determine that the first PDU session is the PDU session having the association relationship.

Optionally, after determining that the first PDU session is established, the first UE may further send first indication information to the second UE. The first indication information may indicate that the establishment of the first PDU session is completed, and/or the first indication information is used to trigger a data processing process of the PDU session (that is, trigger transfer or sharing of service data between PDU sessions having an association relationship). After receiving the first indication information, the second UE may trigger the data processing process of the PDU session.

The foregoing describes a case in which the SMF accepts the establishment of the PDU session having the association relationship for the first UE. If the SMF rejects the establishment of the PDU session for the first UE, S209 may be replaced with that the SMF sends, to the first UE, a message for rejecting the establishment of the first PDU session, and correspondingly, the first UE receives, from the SMF, the message for rejecting the establishment of the first PDU session. For example, the message includes PDU session establishment reject (PDU session establishment reject). The PDU session establishment reject may indicate to reject the establishment of the first PDU session, or indicate to reject the establishment of the PDU session having the association relationship, or indicate to reject the establishment of the PDU session.

S210: The first access network device sends information about a third tunnel to the SMF, and correspondingly, the SMF receives the information about the third tunnel from the first access network device.

The first access network device allocates, to the N4 session, information about a tunnel for data transmission and reception with the UPF. The tunnel is, for example, referred to as the third tunnel, and the third tunnel is an access network tunnel used by the UPF to send the data of the first UE to the first access network device. The information about the third tunnel includes, for example, an address of the first access network device and an identifier of the third tunnel.

The first access network device may send the information about the third tunnel to the first AMF, and then the first AMF sends the information about the third tunnel to the SMF. For example, the first access network device sends an N2 PDU session response (N2 PDU session response) to the first AMF, and the N2 PDU session response may include the information about the third tunnel. The first AMF invokes a service provided by the SMF, to send the information about the third tunnel to the SMF. The service is, for example, Nsmf_PDUSession_Update SMContext Request.

S211: The SMF sends the information about the third tunnel to the UPF, and correspondingly, the UPF receives the information about the third tunnel from the SMF.

For example, the SMF sends an N4 session modification (N4 session modification) message to the UPF, to send the information about the third tunnel to the UPF.

S212: The first AMF stores the association relationship information.

As described in S209, Namf_Communication_N1N2MessageTransfer sent by the SMF to the first AMF may include the first association indication information, and the first AMF may store, based on the first association indication information, information indicating that the first PDU session is the PDU session having the association relationship (for example, store information indicating that the first PDU session is of a multi-UE PDU session type). In addition, the first AMF may further store the association relationship information. The association relationship information indicates, for example, the association relationship between the first PDU session and the second PDU session.

S202, S205 to S208, and S210 to S212 are all optional steps. In addition, a PDU session establishment process of UE may further include another step. This is not limited in embodiments of this application. Details are not described again.

According to the solution provided in this embodiment of this application, the first UE establishes the first PDU session, and an association relationship may be established between the first PDU session and the second PDU session. For example, service data can be transferred between PDU sessions having an association relationship, and service data of the first PDU session can be transferred to the second PDU session, or service data of the second PDU session can be transferred to the first PDU session. However, regardless of the transfer, both the first PDU session and the second PDU session are established PDU sessions. During media transfer, a session does not need to be established before the transfer, but the transfer may be directly performed. Therefore, a service interruption time period taken in a media transfer process is reduced, and even a service does not need to be interrupted in the media transfer process. This improves service transmission quality and improves user experience.

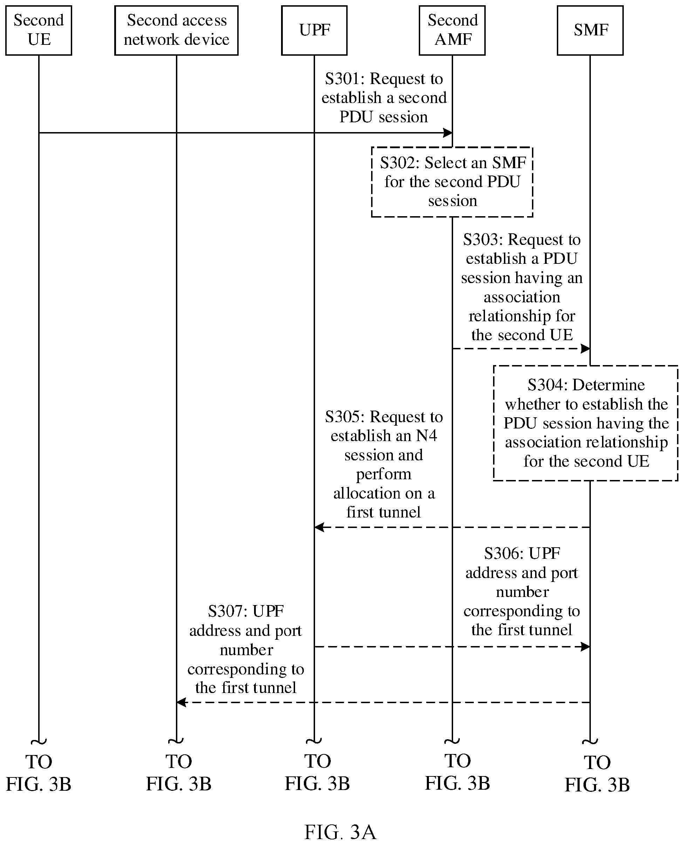

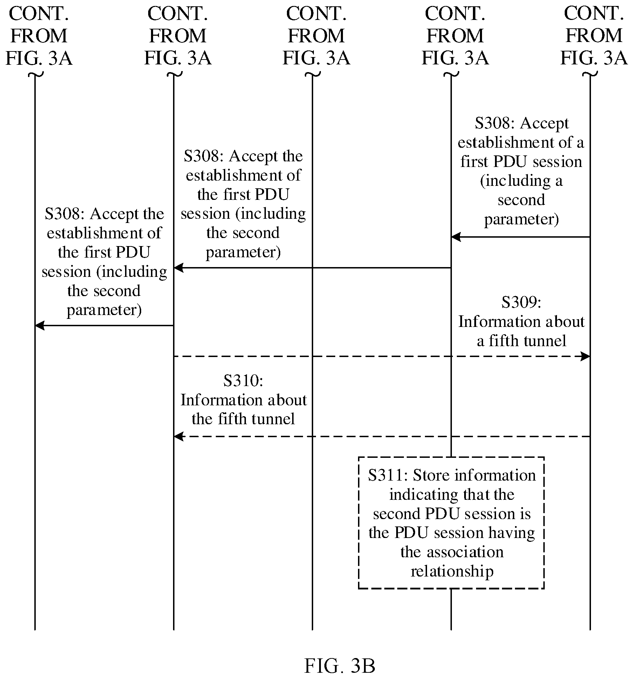

It is mentioned in the embodiment shown in FIG. 2A and FIG. 2B that the second PDU session of the second UE is established. The following describes a second communication method provided in an embodiment of this application. The method describes a process of establishing a second PDU session. FIG. 3A and FIG. 3B are a flowchart of the method.

S301: Second UE sends a sixth message to a second AMF, and correspondingly, the second AMF receives the sixth message from the second UE. The sixth message may be used to request to establish a PDU session for the second UE. For example, the PDU session is referred to as a second PDU session, and the second PDU session is a same PDU session as the second PDU session mentioned in the embodiment shown in FIG. 2A and FIG. 2B. The second AMF is an AMF serving the second UE. The second AMF and a first AMF may be a same AMF, or may be different AMFs.

The sixth message may include a first parameter. The first parameter may indicate that the second UE requests to establish a PDU session having an association relationship (or indicate that a PDU session (for example, the second PDU session) that the second UE requests to establish is a PDU session having an association relationship), and/or the first parameter may be used by the first AMF to select an SMF. For an implementation form of the first parameter, refer to the embodiment shown in FIG. 2A and FIG. 2B.

The sixth message is, for example, a NAS message. For example, the sixth message further includes an N1 session management container (N1 SM container), and the N1 SM container includes a PDU session establishment request. N1 is an interface between UE and an AMF. Interaction between an SMF and the UE is transparently transmitted by using the AMF. Therefore, the first UE may encapsulate interaction information into the N1 SM container, and the first AMF does not parse the N1 SM container, but sends the N1 SM container to the SMF.

Optionally, a condition for triggering, by the second UE, the establishment of the PDU session having the association relationship includes, for example, that the second UE has established a UE group with other UE, and the second UE may transfer or share a service with the other UE in the UE group. In this case, the second UE may trigger the establishment of the PDU session having the association relationship, for example, the second PDU session. For example, if a service that can be supported by the second UE includes a service that can be transferred or shared (for example, a media service, where the media service includes, for example, a video service, an audio service, or an image service), and if the second UE considers that transfer or sharing of these services may be performed with the other UE in the UE group, the second UE may trigger establishment of a PDU session having an association relationship.

Alternatively, a condition for triggering, by the second UE, the establishment of the PDU session having the association relationship includes, for example, that some services, for example, a service like an online video, may be transferred or shared between the second UE and other UE. When establishing a PDU session for these services, the second UE may trigger the establishment of the PDU session having the association relationship, for example, the second PDU session.

Alternatively, a condition for triggering, by the second UE, the establishment of the PDU session having the association relationship includes, for example, that the second UE determines, in a manner like machine learning, that there is a behavior of transferring or sharing some services between the second UE and other UE. For example, in some time ranges and/or geographical ranges, some services may be transferred or shared between the second UE and the other UE. In this case, when the second UE establishes PDU sessions for these services, if the time ranges and/or the geographical ranges are met, the second UE may trigger the establishment of the PDU session having the association relationship, for example, the second PDU session.

The foregoing is merely an example. The condition for triggering, by the second UE, the establishment of the PDU session having the association relationship may further include another condition. This is not limited in embodiments of this application.

The sixth message is used to request to establish the PDU session for the second UE, for example, to request to establish a new second PDU session, or may be used to request to re-establish the second PDU session. If the sixth message is used to request to re-establish the second PDU session, it indicates that the second PDU session has been established before, and a current process is a re-establishment process. Alternatively, the sixth message may be used to request to modify the second PDU session. In this case, it also indicates that the second PDU session has been established before, and a current process is a modification process. If the second PDU session has been established before, the previously established second PDU session may be a PDU session having an association relationship, or may be a PDU session having no association relationship, or may be a common PDU session. In this embodiment of this application, an example in which the sixth message requests to establish the PDU session for the second UE is used.

S302: The second AMF selects an SMF for the second PDU session. The second AMF may select, for the second PDU session, an SMF that supports a PDU session having an association relationship. For example, the second AMF selects, for the second PDU session, an SMF that supports a multi-UE PDU.

Optionally, after receiving the sixth message, the second AMF may obtain subscription information of the second UE, to determine, based on the subscription information of the second UE, whether the second UE supports establishment of a PDU session having an association relationship. For example, if the subscription information of the second UE includes one or more of subscription information indicating that the second UE establishes the PDU session having the association relationship (or subscription information indicating that the second UE establishes the multi-UE PDU request), personal network subscription information, or virtual group subscription information, the second AMF determines that the PDU session having the association relationship can be established for the second UE, and the second AMF may perform S302. However, if the subscription information of the second UE does not include the foregoing items, the second AMF determines that the second UE does not support the establishment of the PDU session having the association relationship, or the second AMF determines that the PDU session having the association relationship cannot be established for the second UE. In this case, the second AMF may send a reject message to the second UE, to reject the establishment of the PDU session having the association relationship for the second UE; or the second AMF may modify a PDU session that is requested to be established based on a fourth request to a PDU session having no association relationship. For example, the second AMF modifies a value of a request type included in the fourth request to a non-multi-UE PDU request, for example, to an initial request.

For example, in the embodiment shown in FIG. 2A and FIG. 2B, if the first AMF selects, for the first PDU session, an SMF serving the second PDU session, the SMF in embodiments of this application and the SMF in the embodiment shown in FIG. 2A and FIG. 2B are a same SMF. However, in the embodiment shown in FIG. 2A and FIG. 2B, if the first AMF does not select, for the first PDU session, an SMF serving the second PDU session, but selects another SMF, the SMF in embodiments of this application and the SMF in the embodiment shown in FIG. 2A and FIG. 2B are different SMFs.

S303: The second AMF sends a seventh message to the SMF, and correspondingly, the SMF receives the seventh message from the second AMF, where the seventh message may be used to request to establish the second PDU session having the association relationship for the second UE, and optionally, the seventh message includes the first parameter.

The seventh message may include an identifier of the second UE, for example, include a second identifier of the second UE. The second identifier of the second UE may include an SUPI or an IMSI of the second UE. The second AMF may map a received 5G-GUTI or MSISDN of the second UE to the SUPI or the IMSI, and then send the obtained SUPI or the IMSI to the SMF.

For example, the second AMF may invoke a service provided by the SMF, to send the seventh message to the SMF. For example, the service is an Nsmf_PDUSession_UpdateSMContext Request service. Optionally, after receiving Nsmf_PDUSession_UpdateSMContext Request (where Nsmf_PDUSession_UpdateSMContext Request may be considered as a seventh message) from the second AMF, the SMF may send a Nsmf_PDUSession_UpdateSMContext Response response to the second AMF.

S304: The SMF determines whether to establish the PDU session having the association relationship for the second UE.

After receiving the seventh message, the SMF may determine whether the second UE supports the establishment of the PDU session having the association relationship. For example, the SMF determines, based on the subscription information of the second UE, whether the second UE supports the establishment of the PDU session having the association relationship. For a determining manner, refer to the determining manner of the second AMF in S302. If the SMF determines that the second UE supports the establishment of the PDU session having the association relationship, the SMF may establish the PDU session having the association relationship for the second UE. However, if the SMF determines that the second UE does not support the establishment of the PDU session having the association relationship, or the SMF determines that the PDU session having the association relationship cannot be established for the second UE, the SMF rejects the establishment of the PDU session having the association relationship for the second UE. If the SMF rejects the establishment of the PDU session having the association relationship for the second UE, the SMF does not need to perform subsequent steps, but may send a reject message to the second UE, to reject the establishment of the PDU session having the association relationship for the second UE. Alternatively, the SMF may change the PDU session that is requested to be established based on the seventh message to a PDU session having no association relationship. For example, the SMF changes a value of a request type included in the seventh message to a non-multi-UE PDU request, for example, to an initial request.

S305: The SMF sends a ninth message to a UPF, and correspondingly, the UPF receives the ninth message from the SMF, where the ninth message may be used to request to establish an N4 session, and request to perform allocation on a first tunnel, the first tunnel is associated with a first QoS flow, the first QoS flow is used to transmit a data stream of a first service, and the first QoS flow is associated with the second PDU session.

The ninth message is, for example, a N4 session modification request, or may be another message. The first tunnel is used for data receiving and sending between the UPF and an access network device, and is a CN tunnel corresponding to the second UE. That the UPF performs allocation on the first tunnel is, for example, that the UPF allocates a UPF address, a port number, and the like to the first tunnel. The first tunnel may be used by the access network device serving the second UE to send data of the second UE to the UPF.

Optionally, the ninth message may further indicate to perform a transport layer proxy function, that is, the UPF acts as a proxy for data receiving and sending between an application and an application server of the UE. In this case, after receiving the ninth message, the UPF may perform the transport layer proxy function. For example, when a transport layer protocol is a TCP, the UPF may perform a TCP proxy function. For another example, when the transport layer protocol is a UDP, the UPF may perform a UDP proxy function. For a TCP proxy, the UPF needs to establish a TCP connection to an application server of the second UE. The UPF performs the transport layer proxy function for the second UE, where the transport layer proxy function is applicable to all applications or all services of the second UE. Alternatively, the UPF may perform the transport layer proxy function for some services (or some applications) of the second UE, where the transport layer proxy function is applicable to the applications, and the applications include, for example, applications that may need to be transferred or shared. For another application of the second UE, the UPF does not perform the transport layer proxy function. The second UE may further send information about the applications to the SMF, where the information about the applications includes, for example, an identifier and/or triplet information of the applications. The triplet information of the application includes, for example, a destination address, a destination port number, and a transport layer protocol type (a TCP or a UDP) of the application.

If the transport layer proxy function is performed, the UPF performs proxy between the UE and the application server. For example, after receiving service data from the UE, the UPF changes a source address of the service data to an address of the UPF, and then sends the service data to the application server. In this case, PDU sessions having an association relationship may not be required to have a same IP address. For example, the SMF or the UPF may allocate a same IP address to the first PDU session and the second PDU session, or may allocate different IP addresses to the first PDU session and the second PDU session. Even if the SMF allocates the different IP addresses to the first PDU session and the second PDU session, because the UPF performs the transport layer proxy function, network elements such as the SMF and the AMF still consider that there is the association relationship between the first PDU session and the second PDU session. For the application server, source addresses of service data sent through the PDU sessions having the association relationship are the same, and all are the address of the UPF. The application server may consider the PDU sessions having the association relationship as a same PDU session, or consider service data from these PDU sessions as service data from a same UE. Therefore, if service data transfer or sharing needs to be performed between the PDU sessions having the association relationship, the application server does not need to re-establish a connection, and the application server may be unaware of the service data transfer or sharing, but continues to normally transmit the service data. Therefore, a service interruption time period can be reduced, and even it can be ensured that a service is not interrupted.

However, if the transport layer proxy function is not performed, after receiving the service data from the UE, the UPF does not change the source address of the service data, but forwards the service data to the application server. In this case, the UPF or the SMF may allocate a same IP address to the first PDU session and the second PDU session, and the first PDU session and the second PDU session may have the same IP address to reflect an association relationship. If an IP address of the first PDU session is the same as an IP address of the second PDU session, the application server considers that service data received from the first PDU session and service data received from the second PDU session are from a same PDU session, or are from a same UE. Therefore, if the service data transfer or sharing needs to be performed between the PDU sessions have the association relationship, the application server does not need to re-establish the connection, and the application server may be unaware of the service data transfer or sharing, but continues to normally transmit the service data. Therefore, a service interruption time period can be reduced, and even it can be ensured that the service is not interrupted.

In addition, if the UPF does not perform the TCP proxy, a TCP connection needs to be established between the first UE and the application server, and a TCP connection also needs to be established between the second UE and the application server. Alternatively, because a TCP connection is first established between the second UE and the application server, the first UE does not need to establish a TCP connection with the application server. The second UE sends information (for example, at least one piece of information like a socket, an IP address or a port number of the server, or an IP address or a port number of the UE) about the TCP connection to the first UE, and the first UE communicates with the application server through the TCP connection. If the UPF performs the TCP proxy, the UE does not need to establish the TCP connection to the application server, but can establish a TCP connection to the UPF. For example, the first UE and the second UE may separately establish a TCP connection to the UPF. Alternatively, the first UE establishes a TCP connection to the UPF, and the second UE does not need to establish a TCP connection to the UPF. The first UE or the UPF sends, to the second UE, information (for example, at least one piece of information like a socket, an IP address or a port number of a server end, or an IP address or a port number of a UE end) about the TCP connection established between the first UE and the UPF, so that the TCP connection can be used between the second UE and the UPF.

In addition, if the UPF does not perform the UDP proxy, because data is first received and sent between the second UE and the application server, the second UE sends, to the first UE, information (at least one piece of information like an IP address or a port number of a server end, or an IP address or a port number of a UE end) about the data received and sent between the second UE and the application server, and the first UE communicates with the application server based on the information.

S306: The UPF sends a thirteenth message to the SMF, and correspondingly, the SMF receives the thirteenth message from the UPF, where if the ninth message is, for example, an N4 session modification request, the thirteenth message is, for example, an N4 session modification response, that is, the thirteenth message may be considered as a response to the ninth message.

The thirteenth message may include information such as a UPF address and a port number that are allocated by the UPF to the first tunnel.

S307: The SMF sends, to a first access network device, the information such as the UPF address and the port number that correspond to the first tunnel, and the corresponding access network device receives the information such as the UPF address and the port number that correspond to the first tunnel. For example, the SMF may send the information such as the UPF address and the port number that correspond to the first tunnel to the first AMF, and then the first AMF sends the information such as the UPF address and the port number that correspond to the first tunnel to the first access network device. In this case, the first access network device receives, from the first AMF, the information such as the UPF address and the port number that correspond to the first tunnel. The first access network device is an access network device serving the first UE.

S308: The SMF sends, to the second UE, a message used to accept the establishment of the second PDU session, and correspondingly, the second UE receives, from the SMF, the message used to accept the establishment of the second PDU session, where the message includes, for example, PDU session establishment accept, the PDU session establishment accept may indicate to accept the establishment of the second PDU session, and the PDU session establishment accept may be encapsulated by the SMF in an N1 SM container, which is represented as the N1 SM container (PDU session establishment accept).

It should be noted that the SMF generally needs to forward the message to the UE by using the AMF. Therefore, the SMF may invoke a service provided by the second AMF, to send the N1 SM container (PDU session establishment accept) to the second AMF. The service is, for example, a Namf_Communication_N1N2MessageTransfer service. After receiving the N1 SM container (PDU session establishment accept), the second AMF encapsulates the N1 SM container (PDU session establishment accept) into a NAS message, which is represented as the NAS message (N1 SM container (PDU session establishment accept)), and then sends an eighth message to the second UE. The eighth message may include the NAS message (N1 SM container (PDU session establishment accept)). For example, the eighth message sent by the second AMF is an N2 message, but the N2 message is sent to a second access network device, the N2 information includes the NAS message (N1 SM container (PDU session establishment accept)), and the N2 message is, for example, an N2 PDU session request. After receiving the N2 message, the second access network device sends the NAS message (N1 SM container (PDU session establishment accept)) to the UE by using an RRC message, where the RRC message is, for example, AN specific resource setup. In conclusion, the PDU session establishment accept may be included in the N1 SM container, and Namf_Communication_N1N2MessageTransfer, the N2 PDU session request, and the AN specific resource setup each include the N1 SM container. The N2 message is information sent by an AMF (for example, the second AMF) to an access network device (for example, the second access network device) through an N2 interface.

Optionally, Namf_Communication_N1N2MessageTransfer sent by the SMF to the second AMF may further include third association indication information, and the third association indication information may indicate that the second PDU session is established as a PDU session having an association relationship (for example, indicate that the second PDU session is established as a multi-UE PDU session). After receiving the third association indication information, the second AMF may store information indicating that the second PDU session is the PDU session having the association relationship (for example, store information indicating that the second PDU session is of a multi-UE PDU session type).

Optionally, the SMF may further send a second parameter to the second UE, where the second parameter may indicate a manner of performing data processing in a PDU session, where data processing can be performed between PDU sessions having an association relationship. For related content of the second parameter, refer to the embodiment shown in FIG. 2A and FIG. 2B. If the SMF creates the second PDU session as a PDU session having no association relationship, the SMF may not need to send the second parameter to the second UE. The second parameter may be included in a message used to accept the establishment of the second PDU session. For example, the second AMF may send the second parameter to the second UE by using the eighth message. Alternatively, the SMF may send the second parameter by using another message. In this case, the second AMF may send the second parameter to the second UE by using the another message instead of the eighth message. In FIG. 3A and FIG. 3B, an example in which the SMF sends the second parameter to the second UE by using the message used to accept the establishment of the second PDU session is used.

If the second parameter is received from the SMF, the UE may determine that the second PDU session is a PDU session having an association relationship. If the second parameter is not received from the SMF, the UE may determine that the second PDU session is a PDU session having no association relationship. Alternatively, if the SMF creates the second PDU session as a PDU session having an association relationship, the SMF may send fourth association indication information to the second UE in addition to sending the second parameter to the second UE. The fourth association indication information may indicate that the second PDU session is the PDU session having the association relationship. The UE may determine, based on the fourth association indication information, that the second PDU session is the PDU session having the association relationship. However, if the SMF creates the second PDU session as a PDU session having no association relationship, the SMF may not send fourth association indication information to the second UE in addition to not sending the second parameter to the second UE. If the second UE does not receive the fourth association indication information from the SMF, the second UE may determine that the second PDU session is the PDU session having no association relationship. Alternatively, if the SMF creates the second PDU session as a PDU session having no association relationship, the SMF may send fourth association indication information to the second UE in addition to not sending the second parameter to the second UE. The fourth association indication information may indicate that the second PDU session is the PDU session having no association relationship. The UE may determine, based on the fourth association indication information, that the second PDU session is the PDU session having no association relationship. However, if the SMF creates the second PDU session as a PDU session having an association relationship, the SMF may not send fourth association indication information to the second UE in addition to sending the second parameter to the second UE. If the second UE does not receive the fourth association indication information from the SMF, the second UE may determine that the second PDU session is the PDU session having the association relationship.

The foregoing describes a case in which the SMF accepts the establishment of the PDU session for the second UE. If the SMF rejects the establishment of the PDU session for the second UE (that is, neither a PDU session having an association relationship nor a PDU session having no association relationship is established), S308 may be replaced with that the SMF sends, to the second UE, a message for rejecting the establishment of the second PDU session, and correspondingly, the second UE receives, from the SMF, the message for rejecting the establishment of the second PDU session. For example, the message includes PDU session establishment reject. The PDU session establishment reject may indicate to reject the establishment of the second PDU session, or indicate to reject the establishment of the PDU session having the association relationship, or indicate to reject the establishment of the PDU session.

S309: The second access network device sends information about a fifth tunnel to the SMF, and correspondingly, the SMF receives the information about the fifth tunnel from the second access network device.

The second access network device allocates, to the N4 session, information about a tunnel for data transmission and reception with the UPF. The tunnel is, for example, referred to as a fifth tunnel, and the fifth tunnel is an access network tunnel used by the UPF to send data of the second UE to the second access network device. The information about the fifth tunnel includes, for example, an address of the second access network device and an identifier of the fifth tunnel.

The second access network device may send the information about the fifth tunnel to the second AMF, and then the second AMF sends the information about the fifth tunnel to the SMF. For example, the second access network device sends an N2 PDU session response to the second AMF, and the N2 PDU session response may include the information about the fifth tunnel. The second AMF invokes a service provided by the SMF, to send the information about the fifth tunnel to the SMF. The service is, for example, Nsmf_PDUSession_Update SMContext Request.

S310: The SMF sends the information about the fifth tunnel to the UPF, and correspondingly, the UPF receives the information about the fifth tunnel from the SMF.

For example, the SMF sends an N4 session modification message to the UPF, to send the information about the fifth tunnel to the UPF.

S311: The second AMF stores information indicating that the second PDU session is the PDU session having the association relationship.

As described in S308, Namf_Communication_N1N2MessageTransfer sent by the SMF to the second AMF may include the third association indication information, and the second AMF may store, based on the third association indication information, information indicating that the second PDU session is the PDU session having the association relationship (for example, store information indicating that the second PDU session is of a multi-UE PDU session type). Optionally, the second AMF may further store information like an identifier of the second PDU session and an identifier of the SMF serving the second PDU session.

S302 to S307 and S308 to S311 are all optional steps. In addition, a PDU session establishment process of UE may further include another step. This is not limited in embodiments of this application. Details are not described again.

According to the solutions provided in embodiments of this application, the second UE establishes the second PDU session, and the second PDU session is a PDU session having an association relationship. In other words, an association relationship can be established between the second PDU session and another PDU session. For example, service data can be transferred between PDU sessions having an association relationship, and service data of the first PDU session can be transferred to the second PDU session, or service data of the second PDU session can be transferred to the first PDU session. However, regardless of the transfer, both the first PDU session and the second PDU session are established PDU sessions. During media transfer, a session does not need to be established before the transfer, but the transfer may be directly performed. Therefore, a service interruption time period taken in a media transfer process is reduced, and even a service does not need to be interrupted in the media transfer process. This improves service transmission quality and improves user experience.

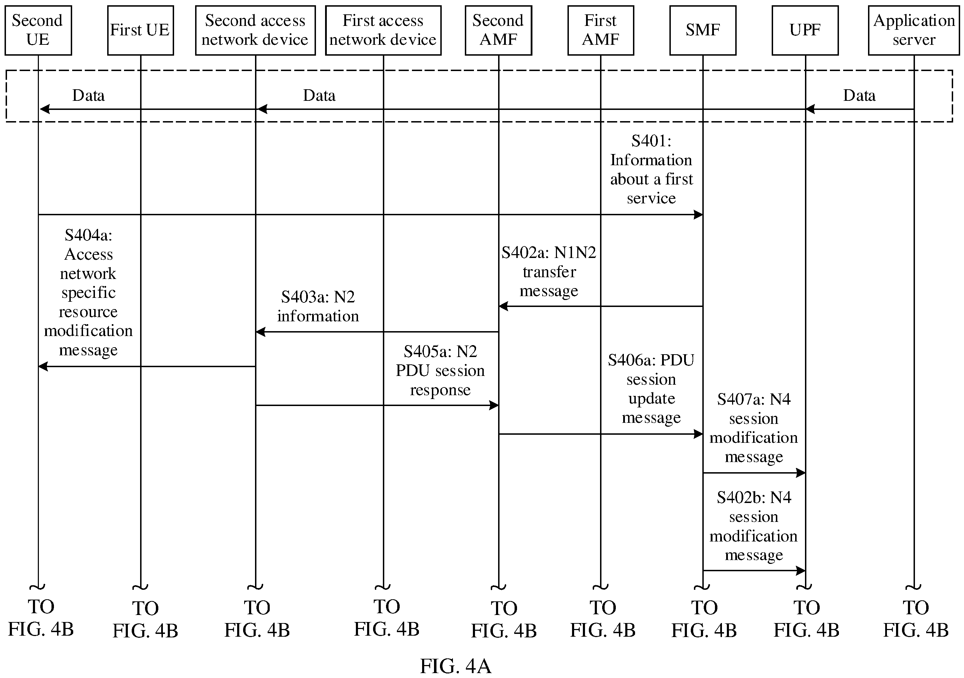

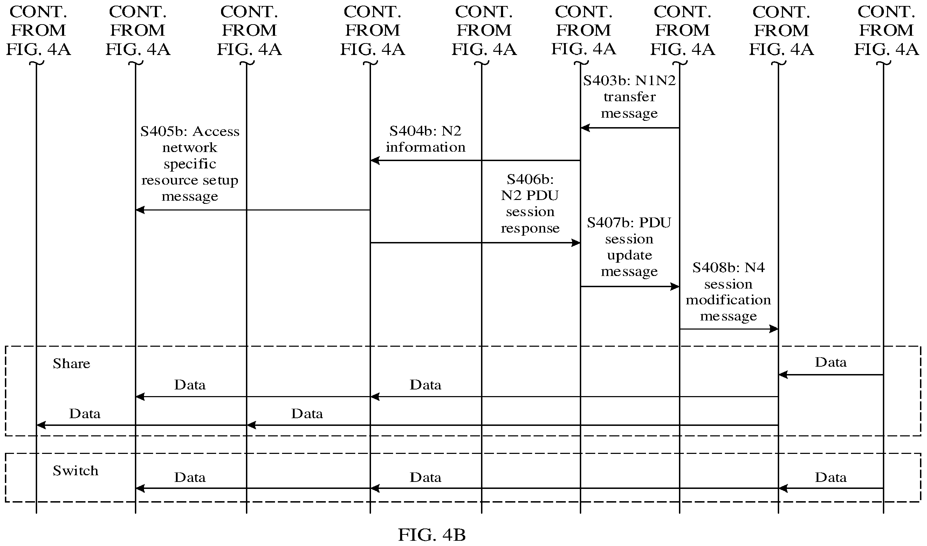

After the second UE and the first UE separately establish PDU sessions, service transfer or sharing may be performed between the PDU sessions. The following describes a third communication method provided in an embodiment of this application. According to the method, service transfer or sharing can be implemented between PDU sessions. FIG. 4A and FIG. 4B are a flowchart of the method.

S401: Second UE sends information about a first service to an SMF, and correspondingly, the SMF receives the information about the first service. The SMF is an SMF serving a second PDU session, and the first service is a service that needs to be transferred or shared between PDU sessions having an association relationship. For example, the second UE sends the information about the first service to the SMF by using NAS information.

The information about the first service includes, for example, one or more of the following: a QoS flow identifier (QoS flow identifier, QFI) corresponding to the first service, a QoS rule (rule), a packet filter (packet filter), an identifier of the first service, and packet information for describing a data stream of the first service. The QFI corresponding to the first service indicates a QoS flow that corresponds to the second UE and that is used to transmit the first service. The QoS rule may be used by the second UE to map, based on the QoS rule, the first service to the QoS flow corresponding to the first service for transmission. A packet filtering rule may be used by a UPF to determine, according to the packet filtering rule, that a data packet is a data packet corresponding to the first service. For the identifier of the first service and the packet information for describing the data stream of the first service, refer to the descriptions of the embodiment shown in FIG. 2A and FIG. 2B.

Optionally, the second UE may further send a first processing manner to the SMF, or send information about a first processing manner. The first processing manner is a manner in which the first service is transferred or shared. For example, in the first processing manner, data of the first service is transferred between the second UE and another UE (for example, a first UE), or data of the first service is transferred between a PDU session of another UE and the second PDU session. This manner is considered as transfer of the first service. For example, the data of the first service is transferred from the PDU session of the another UE to the second PDU session, or the data of the first service is transferred from the second PDU session to the PDU session of the another UE. Alternatively, in the first processing manner, the data of the first service is transmitted between the second UE and the another UE (for example, the first UE), or the data of the first service is transmitted in the PDU session of the another UE and the second PDU session. This manner is considered as sharing of the first service. For example, the data of the first service is transmitted in both the PDU session of the another UE and the second PDU session, and the first service transmitted in the PDU session of the another UE may be the same as the first service transmitted in the second PDU session. There is an association relationship between the PDU session of the another UE and the second PDU session. For example, the another UE includes the first UE, and the PDU session of the another UE includes a first PDU session.

For example, the second UE initiates a PDU session modification (PDU session modification) procedure, to implement service transfer or sharing through the PDU session modification procedure. The second UE may send the information about the first service (or send the information about the first service and the first processing manner) to the SMF in the PDU session modification procedure. For example, the second UE sends the information about the first service (or send the information about the first service and the first processing manner) to the SMF by using a NAS message, where the NAS message includes a PDU session modification request (PDU session modification request). The second UE sends the NAS message to a second AMF, and the second AMF invokes a service provided by the SMF, to send content such as the PDU session modification request and the information about the first service (or the PDU session modification request, the information about the first service, and the first processing manner) to the SMF. For example, the service provided by the SMF is PDU session update (Nsmf_PDUSession_Update).

Next, the PDU session modification procedure of the second UE may be performed. Therefore, optionally, the method may include S402a to S407a, which are the PDU session modification procedure of the second UE.

S402a: The SMF invokes a service provided by the second AMF, to send a message to the second AMF, and correspondingly, the second AMF receives the message from the SMF. The second AMF is an AMF serving the second PDU session, and the service provided by the second AMF is, for example, N1N2 transfer (Namf_N1N2transfer). In FIG. 4A and FIG. 4B, for example, the message is referred to as an N1N2 transfer message.

Optionally, the second AMF may further send a response to the SMF.

S403a: The second AMF sends a message to a second access network device, and correspondingly, the second access network device receives the message from the second AMF. The second access network device is an access network device serving the second UE. The message is, for example, an N2 message (which is used as an example in FIG. 4A and FIG. 4B), and the N2 message may include the NAS message from the second UE.

S404a: The second access network device sends a message to the second UE, and correspondingly, the second UE receives the message from the second access network device. For example, the message is an access network specific resource modification (AN specific resource modification) message. This is used as an example in FIG. 4A and FIG. 4B. The AN specific resource modification message may include a PDU session modification command (PDU session modification command).

Optionally, the second UE may further send a response to the second access network device.

S405a: The second access network device sends a message to the second AMF, and correspondingly, the second AMF receives the message from the second access network device. For example, the message is an N2 PDU session response (N2 PDU session response). This is used as an example in FIG. 4A and FIG. 4B.

S406a: The second AMF invokes a service provided by the SMF, to send a message to the SMF, and correspondingly, the SMF receives the message from the second AMF. The service provided by the SMF is, for example, Nsmf_PDUSession_Update. In FIG. 4A and FIG. 4B, for example, the message is referred to as a PDU session update message.

S407a: The SMF sends a message to the UPF, and correspondingly, the UPF receives the message from the SMF. The message is, for example, an N4 session modification (N4 session modification) message. This is used as an example in FIG. 4A and FIG. 4B.

The UPF is a UPF serving the second UE, or a UPF serving the second PDU session. It can be learned from the descriptions of the foregoing embodiments that PDU sessions having an association relationship may share a same N4 session. Therefore, optionally, in embodiments of this application, UPFs serving the PDU sessions having the association relationship may be a same UPF. For example, the UPF serving the second UE and a UPF serving the first UE are a same UPF.

In embodiments of this application, the N4 session is used by the SMF to control a function of a UPF associated with a PDU session, including: detection, classification, QoS management, route determining, and the like performed by the UPF on data of the PDU session. By creating the N4 session, the UPF has a N4 session context corresponding to the PDU session, so that the UPF can perform detection, classification, QoS management, route determining, and the like on the data of the PDU session based on N4 session context information.

Optionally, the UPF may further send a response to the SMF.

In addition to the PDU session modification procedure of the second UE, because data transfer or sharing of the first service relates to the second PDU session, optionally, a PDU session modification procedure of the first UE may be performed. Therefore, the method may include S402b to S408b, which are the PDU session modification procedure of the first UE.

S402b: The SMF sends a message to the UPF, and correspondingly, the UPF receives the message from the SMF. The message may also be referred to as a tenth message. The message is, for example, N4 session modification. This is used as an example in FIG. 4A and FIG. 4B.

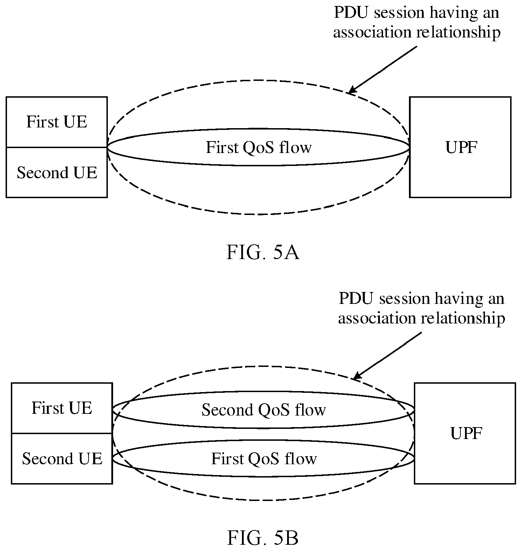

The SMF may configure, for the first PDU session of the first UE based on the information about the first service (or based on the information about the first service and the first processing manner), a QoS flow used to transmit the first service. For example, the SMF may configure a first QoS flow for the first UE to transmit the first service, where the first QoS flow is a QoS flow used by the first UE to transmit the first service, and the first QoS flow is associated with the first PDU session. The SMF may configure the first QoS flow for the first UE to transmit the first service. In this case, the first QoS flow is also associated with the first PDU session. In other words, the SMF may configure the first PDU session and the second PDU session to share the first QoS flow. In this case, the first PDU session and the second PDU session may correspond to a same QFI, namely, a QFI of the first QoS flow. For example, if the first service needs to be transferred from the second PDU session to the first PDU session, the first service does not need to be switched to a new QoS flow, and may still be transmitted on the first QoS flow. In this manner, a quantity of QoS flows can be reduced, and an implementation process can be simplified. Refer to FIG. 5A. The first service is transmitted between the first UE and the UPF, and between the second UE and the UPF by using the first QoS flow.

For another example, the SMF may configure a second QoS flow for the first UE to transmit the first service, and the second QoS flow is associated with the first PDU session. However, the QoS flow used by the second UE to transmit the first service is the first QoS flow, and the first QoS flow is associated with the second PDU session. The first QoS flow and the second QoS flow are different QoS flows. In other words, the SMF configures different QoS flows for the first PDU session and the second PDU session to transmit the first service. In this case, the first PDU session corresponds to a QFI of the second QoS flow, and the second PDU session corresponds to the QFI of the first QoS flow. This manner helps implement separate management of PDU sessions. Refer to FIG. 5B. The first service is transmitted between the first UE and the UPF by using the second QoS flow, and the first service is transmitted between the second UE and the UPF by using the first QoS flow.

After determining, based on the foregoing mechanism, to configure the QoS flow for transmitting the first service for the first PDU session of the first UE, the SMF may send the tenth message to the UPF, to modify an N4 session. If the SMF configures the QoS flow in different manners, content indicated by the tenth message may also be different.

If the SMF configures the first QoS flow for both the first PDU session and the second PDU session to transmit the first service, the tenth message may be used to modify the N4 session and perform allocation on a second tunnel. In this case, the second tunnel is associated with the first QoS flow. The second tunnel is, for example, an access network tunnel corresponding to the first service. The second tunnel is used for data receiving and sending between the UPF and an access network device, and is a CN tunnel corresponding to the second UE. That the UPF performs allocation on the second tunnel is, for example, that the UPF allocates a UPF address, a port number, and the like to the second tunnel. The second tunnel may be used by the second access network device to send the data of the first service to the UPF. In addition, the tenth message may further indicate to transfer data between different UEs through a first tunnel and the second tunnel, or indicate to send same data to different UEs. The first tunnel may be used by the second access network device to send the data of the first service to the UPF. For descriptions of the first tunnel, refer to S301 in the embodiment shown in FIG. 3A. If the tenth message indicates to transfer the data between the different UEs through the first tunnel and the second tunnel, the UPF may modify, based on the tenth message, an access network tunnel corresponding to the first QoS flow from the first tunnel to the second tunnel, to transfer the data of the first service from the second UE to the first UE (or modify the access network tunnel corresponding to the first QoS flow from the second tunnel to the first tunnel, to transfer the data of the first service from the first UE to the second UE). Alternatively, if the tenth message indicates to send the same data to the different UEs, the UPF may change an access network tunnel corresponding to the first QoS flow from the first tunnel to the first tunnel and the second tunnel (or from the second tunnel to the first tunnel and the second tunnel), so that the first QoS flow corresponds to two tunnels, to transmit the data of the first service between the first UE and the second UE, or to share the data of the first service between the first UE and the second UE. The data that is of the first service and that is transmitted by the first UE may be the same as the data that is of the first service and that is transmitted by the second UE, which is also considered as duplication (duplication). Whether the tenth message indicates data transfer or data sharing may be determined based on the first processing manner, or if the SMF does not receive the first processing manner, the SMF may determine by itself, for example, determine based on a type of the first service.

To indicate the UPF more clearly, optionally, the SMF may further send second indication information to the UPF. The second indication information may indicate that the access network tunnel corresponding to the first QoS flow is set to the first tunnel or the second tunnel, or indicate that the access network tunnel corresponding to the first QoS flow is the first tunnel and the second tunnel. For example, if the tenth message indicates to transfer the data between the different UEs through the first tunnel and the second tunnel, the second indication information may indicate to set the access network tunnel corresponding to the first QoS flow to the first tunnel or the second tunnel, and the UPF may modify, based on the second indication information, the access network tunnel corresponding to the first QoS flow from the first tunnel to the second tunnel, to transfer the data of the first service from the second UE to the first UE, or modify the access network tunnel corresponding to the first QoS flow from the second tunnel to the first tunnel, to transfer the data of the first service from the first UE to the second UE. Alternatively, if the tenth message indicates to send the same data to the different UEs, the second indication information may indicate that the access network tunnel corresponding to the first QoS flow are the first tunnel and the second tunnel, and the UPF may modify, based on the second indication information, the access network tunnel corresponding to the first QoS flow from the first tunnel to the first tunnel and the second tunnel, or from the second tunnel to the first tunnel and the second tunnel.

Alternatively, if the SMF configures the second QoS flow for the first PDU session to transmit the first service, and configures the first QoS flow for the second PDU session to transmit the first service, the tenth message may be used to modify the N4 session and perform allocation on the second tunnel. In this case, the second tunnel is associated with the second QoS flow. The second tunnel is, for example, an access network tunnel corresponding to the first service. The second tunnel is used for data receiving and sending between the UPF and an access network device, and is a CN tunnel corresponding to the second UE. That the UPF performs allocation on the second tunnel is, for example, that the UPF allocates a UPF address, a port number, and the like to the second tunnel. The second tunnel may be used by the second access network device to send the data of the first service to the UPF. In addition, the tenth message may further indicate to transfer the data between the different UEs by using the first QoS flow and the second QoS flow, or indicate to send the same data to the different UEs. If the tenth message indicates to transfer the data between the different UEs by using the first QoS flow and the second QoS flow, the UPF may modify, based on an indication of the tenth message, the QoS flow corresponding to the first service from the first QoS flow to the second QoS flow, to transfer the data of the first service from the second UE to the first UE, or modify the QoS flow corresponding to the first service from the second QoS flow to the first QoS flow, to transfer the data of the first service from the first UE to the second UE. Alternatively, if the tenth message indicates to send the same data to the different UEs, the UPF may modify, based on an indication of the tenth message, the QoS flow corresponding to the first service from the first QoS flow to the first QoS flow and the second QoS flow, or modify the QoS flow corresponding to the first service from the second QoS flow to the first QoS flow and the second QoS flow, so that the first service corresponds to two QoS flows, to transmit the data of the first service between the first UE and the second UE, or share the data of the first service between the first UE and the second UE. The data of the first service transmitted by the first UE may be the same as the data of the first service transmitted by the second UE, which is also considered as replication. Whether the tenth message indicates data transfer or data sharing may be determined based on the first processing manner, or if the SMF does not receive the first processing manner, the SMF may determine by itself, for example, determine based on a type of the first service.

To indicate the UPF more clearly, optionally, the SMF may further send the second indication information to the UPF. The second indication information may indicate to transmit a data stream of the first service by using the first QoS flow or the second QoS flow, or transmit a data stream of the first service by using the first QoS flow and the second QoS flow. For example, if the tenth message indicates to transfer data between different terminal devices by using the first QoS flow and the second QoS flow, the second indication information may indicate to transmit the data stream of the first service by using the first QoS flow or the second QoS flow, and the UPF may modify, based on the second indication information, the QoS flow corresponding to the first service from the first QoS flow to the second QoS flow, to transfer the data of the first service from the second UE to the first UE, or modify the QoS flow corresponding to the first service from the second QoS flow to the first QoS flow, to transfer the data of the first service from the first UE to the second UE. Alternatively, if the tenth message indicates to send same data to different UEs, the second indication information may indicate to transmit the data stream of the first service by using the first QoS flow and the second QoS flow, and the UPF may modify, based on the second indication information, the QoS flow corresponding to the first service from the first QoS flow to the first QoS flow and the second QoS flow, or modify the QoS flow corresponding to the first service from the second QoS flow to the first QoS flow and the second QoS flow.

One manner in which the SMF needs to indicate the UPF to modify the QoS flow corresponding to the first service is that the SMF modifies a mapping relationship between the data packet and the QFI. For example, the SMF sends a packet detection rule (packet detection rule, PDR) corresponding to the first service to the UPF, and the PDR may be used by the UPF to filter out the data packet of the first service. The PDR may include a QoS enforcement rule (qos enforcement rule, QER), and the QER may include a QFI. In other words, a data packet that can be applied to the PDR is mapped by the UPF to a QoS flow corresponding to the QFI included in the QER for transmission. For example, the SMF modifies the QFI included in the QER from a QFI 1 to a QFI 2, and after receiving the PDR, the UPF transfers the first service from the second UE to the first UE. Alternatively, the SMF modifies the QFI included in the QER from a QFI 1 to the QFI 1 and a QFI 2, to transmit the first service between the first UE and the second UE, and after receiving the PDR, the UPF transfers the first service from the second UE to the first UE and the first UE. The QFI 1 is a QFI of the first QoS flow, and the QFI 2 is a QFI of the second QoS flow.

Optionally, after receiving the tenth message, the UPF may further send a response to the SMF.

In addition, optionally, S407a and S402b may be performed in a combined manner. For example, the N4 session modification message and the tenth message in S407a are a same message.

S403b: After configuring, for the first PDU session of the first UE based on S402b, the QoS flow used to transmit the first service, the SMF invokes a service provided by a first AMF, and sends a message to the first AMF, where the message includes information that is separately sent to the access network device and the first UE and that is used to configure, for the first PDU session of the first UE, the QoS flow used to transmit the first service, and correspondingly, the first AMF receives the message from the SMF. The first AMF is an SMF serving the first PDU session, and the service provided by the first AMF is, for example, Namf_N1N2transfer. In FIG. 4A and FIG. 4B, the message is referred to as an N1N2 transfer message. In embodiments of this application, the SMF serving the first PDU session and the SMF serving the second PDU session are, for example, a same SMF. The information that is sent to the access network device and that is used to configure, for the first PDU session of the first UE, the QoS flow used to transmit the first service includes information about a CN tunnel allocated by the UPF to the QoS flow.

Optionally, the second AMF may further send a response to the SMF.

S404b: The first AMF sends a message to a first access network device, and correspondingly, the first access network device receives the message from the first AMF. The first access network device is an access network device serving the first UE. The message is, for example, an N2 message. This is used as an example in FIG. 4A and FIG. 4B. The N2 message may also be referred to as a third message, and the N2 message may include a NAS message (the tenth message) sent by the SMF to the first UE. For example, the N2 message includes the information, for example, a QFI, about the QoS flow that is configured by the SMF for the first UE and that is used to transmit the first service.

S405b: The first access network device sends a message to the first UE, and correspondingly, the first UE receives the message from the first access network device. The message includes the NAS message (a PDU session modification command, a part that is in the N1N2 transfer message in S403b and that is sent by the SMF to the first UE) sent by the SMF to the first UE. The message is, for example, an access network specific resource setup (AN specific resource setup) message. This is used as an example in FIG. 4A and FIG. 4B. The AN specific resource setup may include a radio bearer configured by the first access network device based on the information that is about the QoS flow sent by the SMF to the first access network device and that is in the N1N2 transfer message in S403b, and further include a PDU session modification command. The PDU session modification command includes, for example, information such as an ID of the first PDU session and a QoS rule corresponding to the first PDU session.

Optionally, the first UE may further send a response to the first access network device.

S406b: The first access network device sends a message to the first AMF, and correspondingly, the first AMF receives the message from the first access network device. For example, the message is an N2 PDU session response. This is used as an example in FIG. 4A and FIG. 4B. The message includes information about an AN tunnel allocated by the first access network device to the QoS flow for transmitting the first service.

S407b: The first AMF invokes a service provided by the SMF, to send a message to the SMF, and correspondingly, the SMF receives the message from the first AMF. The service provided by the SMF is, for example, Nsmf_PDUSession_Update. In FIG. 4A and FIG. 4B, for example, the message is referred to as a PDU session update message.

S408b: The SMF sends a message to the UPF, and correspondingly, the UPF receives the message from the SMF. The message is, for example, an N4 session modification message. This is used as an example in FIG. 4A and FIG. 4B. The message may include the information about the AN tunnel allocated by the first access network device to the QoS flow for transmitting the first service.

Optionally, after receiving the N4 session modification message, the UPF may further send a response to the SMF.

Optionally, the N4 session modification message may further indicate to transfer data between different UEs through the first tunnel and the second tunnel, or indicate to send same data to different UEs. For descriptions of features such as the first tunnel and the second tunnel, refer to S402b.

Optionally, the SMF may further send the second indication information to the UPF. The second indication information may indicate to set an access network tunnel corresponding to the first QoS flow as the first tunnel or the second tunnel, or indicate that an access network tunnel corresponding to the first QoS flow is the first tunnel and the second tunnel. Alternatively, the second indication information may indicate to transmit the data stream of the first service by using the first QoS flow or the second QoS flow, or transmit the data stream of the first service by using the first QoS flow and the second QoS flow. For this part of content, refer to S402b.

In the foregoing manner, N4 session modification is implemented by indicating the UPF to modify a tunnel or a QoS flow, or in another manner, N4 session modification may be implemented by updating a multi-UE rule to the UPF. In this case, the N4 session modification message may further indicate to modify the N4 session and perform allocation on the second tunnel, but may not indicate service transfer or sharing. For example, the SMF sends an updated multi-UE rule to the UPF, where the multi-UE rule may indicate to transfer the first service from the first UE to the second UE, and the UPF may send, according to the multi-UE rule, downlink data of the first service to an access network tunnel corresponding to the second UE; or the multi-UE rule may indicate to transfer the first service from the second UE to the first UE, and the UPF may send, according to the multi-UE rule, downlink data of the first service to an access network tunnel corresponding to the first UE. Alternatively, the multi-UE rule may indicate to transfer the first service to the first UE and the second UE, and the UPF may send, according to the multi-UE rule, downlink data of the first service to an access network tunnel corresponding to the first UE and an access network tunnel corresponding to the second UE.

In addition, in S401, that the second UE sends the information about the first service to the SMF is used as an example. Alternatively, in another possibility, the second UE may send the information about the first service (or the information about the first service and the first processing manner) to the first UE, and the first UE sends the information about the first service (or sends the information about the first service and the first processing manner) to the SMF. In other words, the first UE initiates the PDU session modification procedure.

It can be learned from FIG. 4A and FIG. 4B that before the embodiment shown in FIG. 4A and FIG. 4B is performed, an application server sends the data of the first service to the second UE. After the embodiment shown in FIG. 4A and FIG. 4B is performed, the application server may send the data of the first service to the first UE and the second UE (where service data of the second PDU session is shared between the first PDU session and the second PDU session), or the application server may send the data of the first service to the first UE, and no longer send the data of the first service to the second UE (where service data of the second PDU session is transferred to the first PDU session).

In embodiments of this application, because there is the association relationship between the first PDU session and the second PDU session, service data of the first PDU session can be transferred to the second PDU session, or the service data of the second PDU session can be transferred to the first PDU session, or the service data of the second PDU session can be shared between the first PDU session and the second PDU session. However, regardless of the transfer or sharing, both the first PDU session and the second PDU session are established PDU sessions. During media transfer or sharing, a session does not need to be established before the transfer, but the transfer or sharing may be directly performed. Therefore, a service interruption time period taken in a media transfer or sharing process is reduced, and even a service does not need to be interrupted in the media transfer or sharing process. This improves service transmission quality and improves user experience.

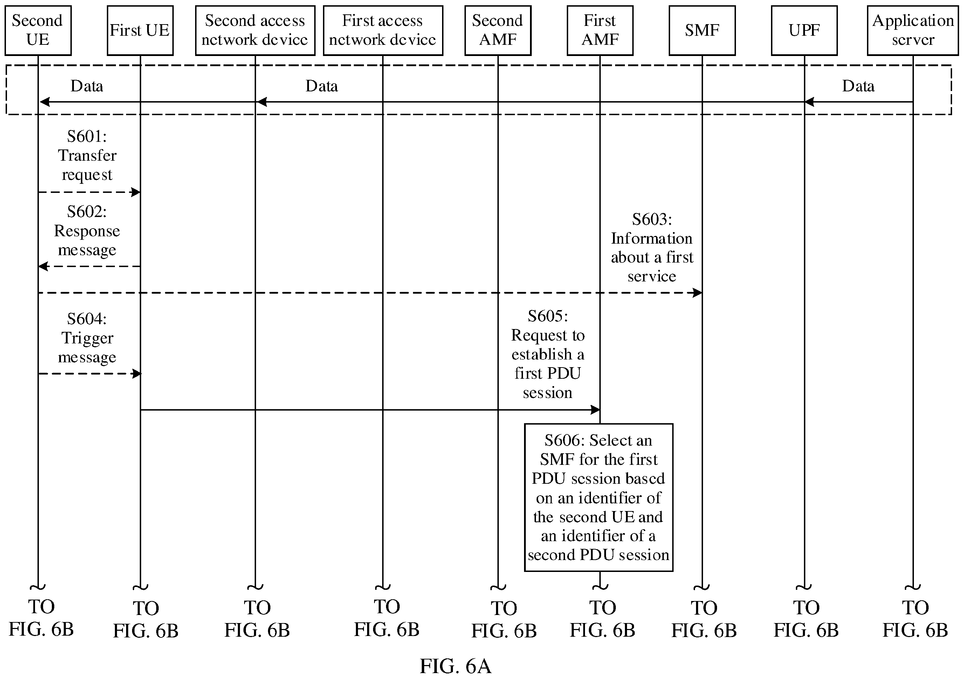

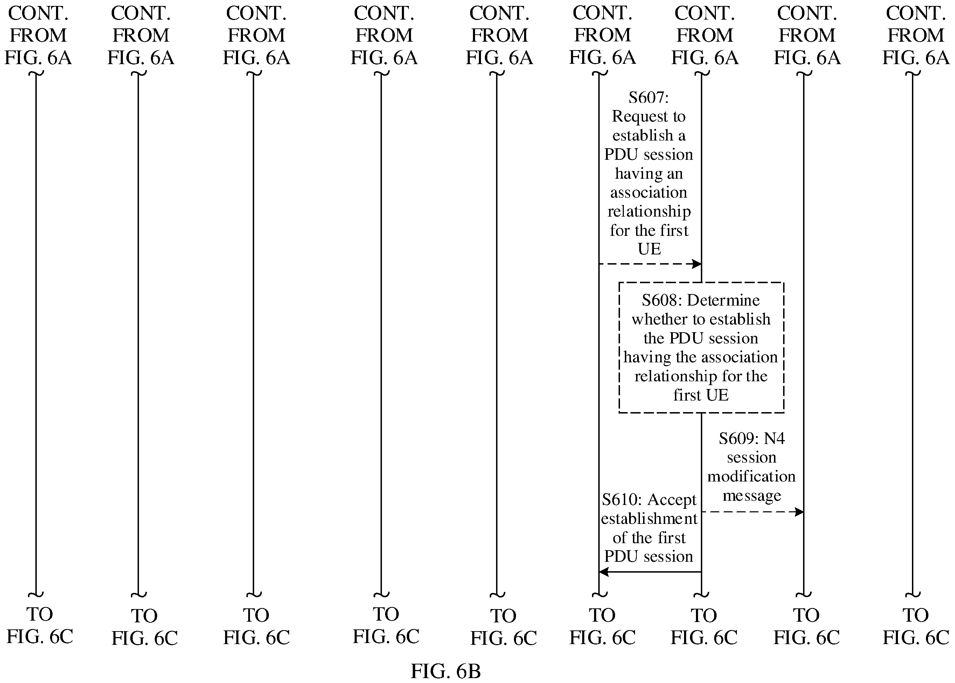

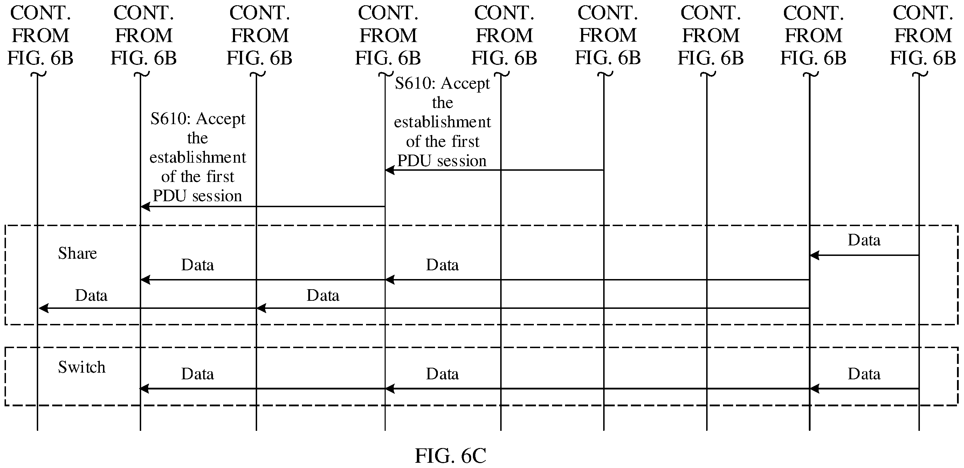

In embodiments shown in FIG. 2A and FIG. 2B, FIG. 3A and FIG. 3B, and FIG. 4A and FIG. 4B, the first UE first establishes the first PDU session, and then transfers or shares a service. In another possibility, the first UE may transfer or share a service in a process of establishing the first PDU session. In this way, the first UE does not need to perform a subsequent PDU session modification procedure, so that the service transfer or sharing process can be simplified, and processing efficiency can be improved. Therefore, an embodiment of this application provides a fourth communication method, to describe the process. FIG. 6A to FIG. 6C are a flowchart of the method.

S601: Second UE sends a transfer request to first UE, and correspondingly, the first UE receives the transfer request from the second UE.

The transfer request is, for example, used to request to transfer a first service of the second UE to the first UE, or request to share a first service between the first UE and the second UE. The transfer request may include an identifier of a second PDU session, an identifier of the second UE (for example, a first identifier of the second UE or a second identifier of the second UE), and information about the first service. Optionally, the transfer request may further include a connection parameter. For descriptions of these features, refer to any one of the foregoing embodiments.

S602: The first UE sends a response message to the second UE, and correspondingly, the second UE may receive the response message from the first UE. The response message may indicate whether the transfer or sharing of the first service is allowed. For example, the response message further includes an identifier of the first UE (for example, a first identifier of the first UE or a second identifier of the first UE).

S603: The second UE sends information about the first service to an SMF, and correspondingly, the SMF receives the information about the first service, where after receiving the information about the first service, the SMF may store the information about the first service.

For more content of S603, refer to S401 in the embodiment shown in FIG. 4A.

For example, if the second UE sends the information about the first service to the SMF by initiating a PDU session modification procedure, an N4 session modification procedure of the second UE may be performed subsequently. For details, refer to the descriptions of the embodiment shown in FIG. 4A and FIG. 4B. Details are not described herein again.

S604: The second UE sends a trigger message to the first UE, and correspondingly, the first UE receives the trigger message from the second UE.

The trigger message may indicate to establish a PDU session. Because the second UE considers that the first service needs to be transferred or shared, the second UE may trigger the second UE to establish a PDU session.

S605: The first UE sends a first message to a first AMF, and correspondingly, the first AMF receives the first message from the first UE. The first message may be used to request to establish a PDU session for the first UE. For example, the PDU session is referred to as a first PDU session.

For more content of S605, refer to S201 in the embodiment shown in FIG. 2A.

S606: The first AMF selects an SMF for the first PDU session based on the identifier of the second UE (for example, the first identifier of the second UE) and the identifier of the second PDU session.

For more content of S606, refer to S203 in the embodiment shown in FIG. 2A.

S607: The first AMF sends a fifth message to the SMF, and correspondingly, the SMF receives the fifth message from the first AMF, where the fifth message may be used to request to establish the first PDU session having an association relationship for the first UE.

For more content of S607, refer to S204 in the embodiment shown in FIG. 2A.

S608: The SMF determines whether to establish a PDU session having an association relationship for the first UE.

For more content of S608, refer to S205 in the embodiment shown in FIG. 2A.

S609: The SMF sends a tenth message to a UPF, and correspondingly, the UPF receives the tenth message from the SMF.

For more content of S609, refer to S402b in the embodiment shown in FIG. 4A.

S610: The SMF sends, to the first UE, a message used to accept the establishment of the first PDU session, and correspondingly, the first UE receives, from the SMF, the message used to accept the establishment of the first PDU session, where the message includes, for example, PDU session establishment accept, and the PDU session establishment accept may indicate to accept the establishment of the first PDU session.

The SMF generally needs to forward a message to UE by using an AMF. Therefore, the SMF may invoke a service provided by the first AMF, to send the PDU session establishment accept to the first AMF. The service is, for example, an Namf_Communication_N1N2MessageTransfer service. After receiving the PDU session establishment accept, the first AMF sends a second message to the first UE. The second message may include the PDU session establishment accept. Optionally, the second message may further include information, like a QFI, about a QoS flow that is configured by the SMF for the first UE and that is used to transmit the first service. For example, the second message sent by the first AMF is an N2 message (N2 message), but the N2 message is sent to a first access network device, the N2 message includes the PDU session establishment accept, and the N2 message is, for example, an N2 PDU session request (N2 PDU session request). After receiving the N2 message, the first access network device sends the PDU session establishment accept to the UE based on an RRC message (RRC message), where the RRC message is, for example, access network specific resource setup (AN specific resource setup). The PDU session establishment accept may be included in a container, and Namf_Communication_N1N2MessageTransfer, the N2 PDU session request, and the AN specific resource setup each include the container.

For more content of S610, refer to S209 in the embodiment shown in FIG. 2B.

Alternatively, S603 to S605 may not be performed. After receiving the transfer request from the second UE, the first UE may initiate a process of establishing the first PDU session. For example, the first UE sends the information about the first service to the SMF by using a message used to request to establish the PDU session.

S601 to S604 and S607 to S609 are optional steps.

It can be learned from FIG. 6A to FIG. 6C that before the embodiment shown in FIG. 6A to FIG. 6C is performed, an application server sends the data of the first service to the second UE. After the embodiment shown in FIG. 6A to FIG. 6C is performed, the application server may send the data of the first service to the first UE and the second UE (where service data of the second PDU session is shared between the first PDU session and the second PDU session), or the application server may send the data of the first service to the first UE, and no longer send the data of the first service to the second UE (where service data of the second PDU session is transferred to the first PDU session).

According to the method provided in this embodiment of this application, the service transfer or sharing can be implemented in a PDU session establishment process of the first UE. Compared with the foregoing solutions, this method can reduce execution steps and improve efficiency.

For example, a user watches a video on a website by using a mobile phone on the way home, and a second PDU session is established between the mobile phone and an application server of the video, to transmit the video. After returning to home, the user turns on a smart television. After that, the user logs in to a same account by using the smart television, to continue to watch the video. Before this, a first PDU session is established between the smart television and the application server of the video, and there is an association relationship between the first PDU session and a second PDU session. In this case, when the user continues to watch the video by using the smart television, the smart television may directly play the video without establishing a connection to the application server of the video. In other words, in a media transfer process, when a next device is used to continue to receive media information, a service on a previous device may be directly transferred to the next device. This reduces a service interruption time period and improves user experience.

For another example, the mobile phone and a PC belong to a UE group, and the mobile phone determines that a service may be transferred or shared between the mobile phone and other UE in the UE group. When establishing a PDU session for a video application on the mobile phone, the mobile phone may trigger establishment of a PDU session having an association relationship, for example, a second PDU session. For example, if the mobile phone considers that a service may be transferred or shared to the PC, the mobile phone may send, to the PC, information about the service that needs to be transferred or shared, and the PC may establish a PDU session having an association relationship, for example, a first PDU session. Initially, the user plays, by using the mobile phone, the video provided by the video application, where the video application is an application that is determined by the mobile phone and that may perform transfer or sharing, and the second PDU session may transmit the video. Then, the mobile phone projects, by using a direct communication path (for example, a wireless fidelity (wireless fidelity, Wi-Fi) direct connection) to the PC, the video played on the mobile phone to the PC for playing, and the mobile phone continues playing the video. This is equivalent to sharing the video in the second PDU session and the first PDU session. In this process, if the mobile phone needs to exit the projection, the mobile phone directly exits. For example, after the mobile phone exits, the video may be switched from a sharing mode to a separate play mode, that is, the video is switched to be transmitted by using the first PDU session. That is, in a wireless projection process, a projection device (for example, the mobile phone) may exit, and output of a projected device (for example, the PC) is not affected. In this way, dependency of the projection process on the projection device is reduced, so that a projection application is more flexible.

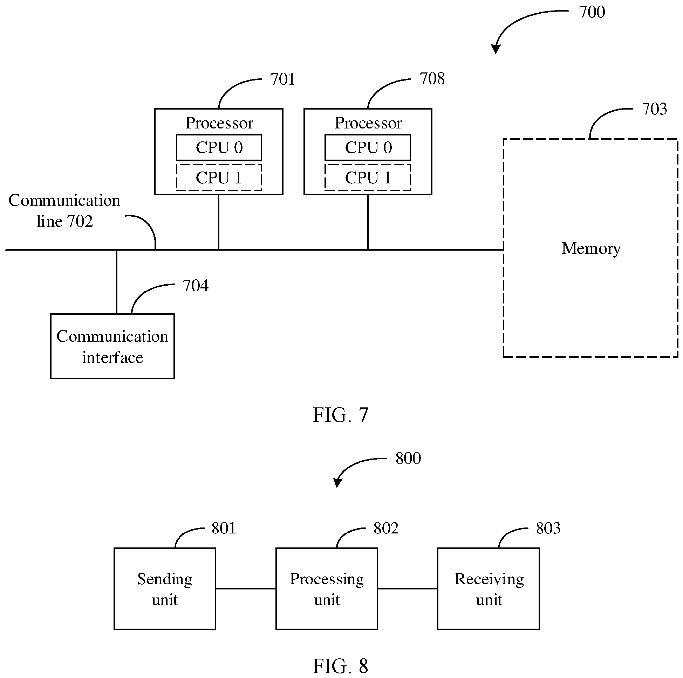

FIG. 7 is a schematic diagram of a structure of a communication apparatus according to an embodiment of this application. The communication apparatus 700 may be the terminal device or a circuit system of the terminal device according to any one of the embodiment shown in FIG. 2A and FIG. 2B, the embodiment shown in FIG. 3A and FIG. 3B, the embodiment shown in FIG. 4A and FIG. 4B, or the embodiment shown in FIG. 6A to FIG. 6C, and is configured to implement a method corresponding to the terminal device in the foregoing method embodiments. The terminal device is, for example, a first terminal device or a second terminal device. Alternatively, the communication apparatus 700 may be the network device or a circuit system of the network device according to any one of the embodiment shown in FIG. 2A and FIG. 2B, the embodiment shown in FIG. 3A and FIG. 3B, the embodiment shown in FIG. 4A and FIG. 4B, or the embodiment shown in FIG. 6A to FIG. 6C, and is configured to implement a method corresponding to the network device in the foregoing method embodiments. The network device is, for example, a first network device, a second network device, or a fourth network device. For specific functions, refer to the descriptions in the foregoing method embodiments. For example, a circuit system is a chip system.

The communication apparatus 700 includes at least one processor 701, a communication line 702, and at least one communication interface 704. In an optional implementation, the communication apparatus 700 may further include a memory 703. The memory 703 is not a necessarily included function module, but is only an optionally included function module, and therefore is indicated by a dashed-line box in FIG. 7.

The processor 701 may include a general-purpose central processing unit (central processing unit, CPU), a microprocessor, an application-specific integrated circuit (application-specific integrated circuit, ASIC), or one or more integrated circuits configured to control execution of programs in the solutions in this application.

The communication line 702 may include a path on which information is transferred between the foregoing components.

The communication interface 704 is configured to communicate with another device or a communication network such as an ethernet, a radio access network (radio access network, RAN), a wireless local area network (wireless local area network, WLAN), or a wired access network by using any apparatus like a transceiver.

The memory 703 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital versatile disc, a Blu-ray disc, or the like), magnetic disk storage medium or another magnetic storage device, or any other medium that can be used to carry or store expected program code in a form of instructions or a data structure and that is accessible to a computer, but is not limited thereto. The memory 703 may exist independently and is connected to the processor 701 through the communication line 702. Alternatively, the memory 703 may be integrated with the processor 701.

The memory 703 is configured to store computer-executable instructions for executing the solutions in this application, and the processor 701 controls the execution. The processor 701 is configured to execute the computer-executable instructions stored in the memory 703, to implement the communication methods provided in the foregoing embodiments of this application.

Optionally, the computer-executable instructions in this embodiment of this application may also be referred to as application program code. This is not specifically limited in embodiments of this application.

During specific implementation, in an embodiment, the processor 701 may include one or more CPUs, for example, a CPU 0 and a CPU 1 in FIG. 7.

During specific implementation, in an embodiment, the communication apparatus 700 may include a plurality of processors, for example, the processor 701 and a processor 708 in FIG. 7. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 7 is a chip, for example, a chip of an access network device, a chip of a UPF, a chip of an SMF, or a chip of a terminal device, the chip includes the processor 701 (and may further include the processor 708), the communication line 702, the memory 703, and the communication interface 704. Specifically, the communication interface 704 may be an input interface, a pin, a circuit, or the like. The memory 703 may be a register, a cache, or the like. The processor 701 and the processor 708 each may be a general-purpose CPU, a microprocessor, an ASIC, or one or more integrated circuits configured to control execution of programs of the communication method in any one of the foregoing embodiments.

In embodiments of this application, the apparatus may be divided into function modules based on the foregoing method examples. For example, function modules may be obtained through division based on corresponding functions, or two or more functions may be integrated into one processing module. The integrated module may be implemented in a form of hardware, or may be implemented in a form of a software function module. It should be noted that, in embodiments of this application, division into modules is an example, and is merely a logical function division. In an actual implementation, another division manner may be used. For example, when function modules are obtained through division based on corresponding functions, FIG. 8 is a schematic diagram of an apparatus. The apparatus 800 may be the access network device, the UPF, the SMF, or the terminal device in the foregoing method embodiments, or a chip in the access network device, a chip in the SMF, a chip in the UPF, or a chip in the terminal device. The apparatus 800 includes a sending unit 801, a processing unit 802, and a receiving unit 803.

It should be understood that the apparatus 800 may be configured to implement steps performed by the access network device, the UPF, the SMF, or the terminal device in the method in embodiments of this application. For related features, refer to the foregoing embodiments. Details are not described herein again.

Optionally, functions/implementation processes of the sending unit 801, the receiving unit 803, and the processing unit 802 in FIG. 8 may be implemented by the processor 701 in FIG. 7 by invoking the computer-executable instructions stored in the memory 703. Alternatively, a function/a implementation process of the processing unit 802 in FIG. 8 may be implemented by the processor 701 in FIG. 7 by invoking the computer-executable instructions stored in the memory 703, and functions/implementation processes of the sending unit 801 and the receiving unit 803 in FIG. 8 may be implemented by the communication interface 704 in FIG. 7.

Optionally, when the apparatus 800 is a chip or a circuit, the functions/the implementation processes of the sending unit 801 and the receiving unit 803 may alternatively be implemented by a pin, a circuit, or the like.

All or some of the foregoing embodiments may be implemented by using software, hardware, firmware, or any combination thereof. When software is used to implement the foregoing embodiments, all or some of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

The various illustrative logical units and circuits described in embodiments of this application may implement or operate the described functions by using a general-purpose processor, a digital signal processor (digital signal processor, DSP), an application-specific integrated circuit (application-specific integrated circuit, ASIC), a field-programmable gate array (field-programmable gate array, FPGA) or another programmable logical apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by the processor, or a combination thereof. The software unit may be stored in a RAM memory, a flash memory, a ROM memory, an EPROM memory, an EEPROM memory, a register, a hard disk, a removable magnetic disk, a CD-ROM, or a storage medium of any other form in the art. For example, the storage medium may connect to a processor, so that the processor may read information from the storage medium and write information to the storage medium. Optionally, the storage medium may alternatively be integrated into a processor. The processor and the storage medium may be disposed in an ASIC, and the ASIC may be disposed in a terminal device. Alternatively, the processor and the storage medium may also be disposed in different components of the terminal device.

These computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more processes in flowcharts and/or in one or more blocks in block diagrams.

Although embodiments of this application are described with reference to specific features and embodiments thereof, it is clear that various modifications and combinations may be made to embodiments of this application without departing from the scope of embodiments of this application. Correspondingly, embodiments and accompanying drawings of this application are merely example descriptions of embodiments of this application defined by the accompanying claims, and are considered as any of or all modifications, variations, combinations or equivalents that cover the scope of embodiments of this application. Clearly, a person skilled in the art can make various modifications and variations to embodiments of this application without departing from the scope of embodiments of this application. In this way, embodiments of this application is intended to cover these modifications and variations provided that they fall within the scope of the claims of embodiments of this application and their equivalent technologies.

Embodiment 1. A communication method, applied to a first terminal device, including:
sending a first message, where the first message is used to request to establish a first PDU session for the first terminal device, the first message further includes an identifier of a second terminal device and an identifier of a second PDU session, the second PDU session is a PDU session of the second terminal device, and the identifier of the second terminal device and the identifier of the second PDU session are used by a first network device to select a second network device or used to establish an association relationship between the first PDU session and the second PDU session; and
receiving a second message from the first network device, where the second message includes information for accepting the establishment of the first PDU session.

Embodiment 2. The method according to Embodiment 1, where the first message further includes a session establishment request message, where
the identifier of the second terminal device and the identifier of the second PDU session are included in the session establishment request message;
the identifier of the second terminal device and the identifier of the second PDU session are included in the first message, but are not included in the session establishment request message; or
the identifier of the second terminal device and the identifier of the second PDU session are included in the session establishment request message, and are included in bearer space other than the session establishment request message in the first message.

Embodiment 3. The method according to Embodiment 1 or 2, where the first message includes a first parameter, and the first parameter indicates that the first PDU session that the first terminal device requests to establish is a PDU session having an association relationship.

Embodiment 4. The method according to any one of Embodiments 1 to 3, where the second message further includes a second parameter, the second parameter indicates a manner of performing data processing on a PDU session, the manner of performing data processing includes transferring service data between the first PDU session and the second PDU session, or transmitting service data in the first PDU session and the second PDU session, and data processing can be performed between PDU sessions having an association relationship.

Embodiment 5. The method according to any one of Embodiments 1 to 4, where the method further includes:
receiving the identifier of the second terminal device and the identifier of the second PDU session from the second terminal device.

Embodiment 6. The method according to any one of Embodiments 1 to 5, where the method further includes:
receiving information about a first service from the second terminal device, where the first service is a service that is to be transferred from the second terminal device to a target terminal device, and the target terminal device includes the first terminal device, or includes the second terminal device and the first terminal device.

Embodiment 7. The method according to any one of Embodiments 1 to 6, where the method further includes:
receiving a connection parameter from the second terminal device, where the connection parameter includes slice information and/or a data network name DNN that correspond/corresponds to the second PDU session.

Embodiment 8. The method according to any one of Embodiments 1 to 7, where the second message includes QoS flow information that is configured by the second network device for the first terminal device and that is used to transmit the first service.

Embodiment 9. The method according to any one of Embodiments 1 to 7, where the method further includes:
receiving a third message from the first network device, where the third message includes QoS flow information that is configured by the second network device for the first terminal device and that is used to transmit the first service.

Embodiment 10. The method according to Embodiment 8 or 9, where the QoS flow information includes an identifier of a QoS flow, and the identifier of the QoS flow is the same as or different from an identifier of a QoS flow of the first service transmitted by the second terminal device.

Embodiment 11. The method according to any one of Embodiments 1 to 10, where the method further includes:
sending the information about the first service to the second network device, where the information about the first service includes an identifier of the first service and/or packet information for describing a data stream of the first service.

Embodiment 12. The method according to Embodiment 11, where the method further includes:
sending a first processing manner to the second network device, where
the first processing manner is transferring data of the first service between the first PDU session and the second PDU session, or transmitting data of the first service in the first PDU session and the second PDU session; or
the first processing manner is transferring data of the first service between the first terminal device and the second terminal device, or transmitting data of the first service on the first terminal device and the second terminal device.

Embodiment 13. The method according to any one of Embodiments 1 to 12, where the method further includes:
sending first indication information to the second terminal device, where the first indication information indicates that the establishment of the first PDU session is completed, and/or is used to trigger a data processing process of a PDU session.

Embodiment 14. A communication method, applied to a second terminal device, where the method includes:
sending a sixth message to a first network device, where the sixth message is used to request to establish a second PDU session for the second terminal device, the sixth message includes a first parameter, and the first parameter indicates that the second PDU session that the second terminal device requests to establish is a PDU session having an association relationship and/or is used to select a second network device; and
receiving an eighth message from the first network device, where the eighth message includes information for accepting the establishment of the second PDU session.

Embodiment 15. The method according to Embodiment 14, where the eighth message further includes a second parameter, the second parameter indicates a manner of performing data processing on a PDU session, the manner of performing data processing includes transferring service data between the second PDU session and a PDU session of another terminal device, or transmitting service data in the second PDU session and a PDU session of another terminal device, and there is an association relationship between the PDU session of the another terminal device and the second PDU session, and data processing can be performed between PDU sessions having an association relationship.

Embodiment 16. The method according to Embodiment 14 or 15, where the method further includes:
sending an identifier of the second terminal device and an identifier of the second PDU session to a first terminal device.

Embodiment 17. The method according to any one of Embodiments 14 to 16, where the method further includes:
sending information about a first service to the first terminal device, where the first service is a service that is to be transferred from the second terminal device to a target terminal device, and the target terminal device includes the first terminal device, or includes the second terminal device and the first terminal device.

Embodiment 18. The method according to any one of Embodiments 14 to 17, where the method further includes:
sending a connection parameter to the first terminal device, where the connection parameter includes slice information and/or a data network name DNN that correspond/corresponds to the second PDU session.

Embodiment 19. The method according to any one of Embodiments 14 to 18, where the method further includes:
sending the information about the first service to the second network device, where the information about the first service includes an identifier of the first service and/or packet information for describing a data stream of the first service.

Embodiment 20. The method according to Embodiment 19, where the method further includes:
sending a first processing manner to the second network device, where
the first processing manner is transferring data of the first service between the PDU session of the another terminal device and the second PDU session, or transmitting data of the first service in the PDU session of the another terminal device and the second PDU session; or
the first processing manner is transferring data of the first service between the first terminal device and the second terminal device, or transmitting data of the first service on the first terminal device and the second terminal device, where
there is an association relationship between the PDU session of the another terminal device and the second PDU session.

Embodiment 21. The method according to Embodiment 19 or 20, where before the sending the information about the first service to the second network device, the method further includes:
receiving first indication information from the first terminal device, where the first indication information indicates that the establishment of the first PDU session is completed, and/or is used to trigger a data processing process of a PDU session.

Embodiment 22. A communication method, applied to a first network device, where the method includes:
receiving a first message, where the first message is used to request to establish a first PDU session for a first terminal device, the first message further includes an identifier of a second terminal device and an identifier of a second PDU session, and the second PDU session is a PDU session of the second terminal device; and
selecting a second network device for the first PDU session based on the identifier of the second terminal device and the identifier of the second PDU session, where the second network device is a network device serving the second PDU session.

Embodiment 23. The method according to Embodiment 22, where the method further includes:
sending a second message to the first terminal device, where the second message includes information for accepting the establishment of the first PDU session.

Embodiment 24. The method according to Embodiment 22 or 23, where the method further includes:
the first message includes a first parameter, and the first parameter indicates that the first PDU session that the first terminal device requests to establish is a PDU session having an association relationship.

Embodiment 25. The method according to any one of Embodiments 22 to 24, where the method further includes:
sending a second parameter to the first terminal device, where the second parameter indicates a manner of performing data processing on a PDU session, the manner of performing data processing includes transferring service data between the first PDU session and the second PDU session, or transmitting service data in the first PDU session and the second PDU session, where data processing can be performed between PDU sessions having an association relationship.

Embodiment 26. The method according to Embodiment 25, where the method further includes:
obtaining subscription information of the first terminal device; and
determining, based on the subscription information of the first terminal device, that a PDU session having an association relationship can be established for the first terminal device.

Embodiment 27. The method according to any one of Embodiments 22 to 26, where the method further includes:
sending a fourth message to a third network device, where the fourth message is used to request to obtain information about a network device serving the second PDU session; and
receiving an identifier of the second network device from the third network device.

Embodiment 28. The method according to any one of Embodiments 22 to 27, where the method further includes:
sending a fifth message to the second network device, where the fifth message is used to request to establish the first PDU session having the association relationship for the first terminal device.

Embodiment 29. The method according to Embodiment 28, where the fifth message further includes the identifier of the second terminal device and the identifier of the second PDU session, and indicates to establish an association relationship between the first PDU session and the second PDU session.

Embodiment 30. The method according to any one of Embodiments 22 to 29, where the method further includes:
storing association relationship information, where the association relationship information indicates the association relationship between the first PDU session and the second PDU session.

Embodiment 31. The method according to any one of Embodiments 22 to 30, where the method further includes:
receiving a sixth message, where the sixth message is used to request to establish the second PDU session for the second terminal device, the sixth message includes a first parameter, and the first parameter indicates that the second PDU session that the second terminal device requests to establish is a PDU session having an association relationship;
selecting the second network device that supports a PDU session having an association relationship; and
sending a seventh message to the second network device, where the seventh message is used to request to establish the second PDU session having the association relationship for the second terminal device.

Embodiment 32. The method according to Embodiment 31, where the method further includes:
sending an eighth message to the second terminal device, where the eighth message includes information for accepting the establishment of the second PDU session.

Embodiment 33. A communication method, applied to a second network device, where the method includes:
receiving a fifth message from a first network device, where the fifth message is used to request to establish a first PDU session having an association relationship for a first terminal device, the fifth message further includes an identifier of a second terminal device and an identifier of a second PDU session, the second PDU session is a PDU session of the second terminal device, and the fifth message indicates that an association relationship is established between the first PDU session and the second PDU session; and
sending, to the first terminal device, a message used to accept the establishment of the first PDU session.

Embodiment 34. The method according to Embodiment 33, where the method further includes:
determining, based on subscription information of the first terminal device, that the first terminal device supports establishment of a PDU session having an association relationship.

Embodiment 35. The method according to Embodiment 33 or 34, where the message used to accept the establishment of the first PDU session includes a second parameter, the second parameter indicates a manner of performing data processing on a PDU session, the manner of performing data processing includes transferring service data between the first PDU session and the second PDU session, or transmitting service data in the first PDU session and the second PDU session, and data processing can be performed between PDU sessions having an association relationship.

Embodiment 36. The method according to any one of Embodiments 33 to 35, where the method further includes:
allocating, to the first PDU session, an IP address that is the same as an IP address of the second PDU session.

Embodiment 37. The method according to any one of Embodiments 33 to 36, where the method further includes:
receiving a seventh message from the first network device, where the seventh message is used to request to establish the second PDU session having an association relationship for the second terminal device.

Embodiment 38. The method according to Embodiment 37, where the method further includes:
sending a second parameter to the second terminal device, where the second parameter indicates a manner of performing data processing on a PDU session, the manner of performing data processing includes transferring service data between the first PDU session and the second PDU session, or transmitting service data in the first PDU session and the second PDU session, where data processing can be performed between PDU sessions having an association relationship.

Embodiment 39. The method according to any one of Embodiments 33 to 38, where the fifth message includes a first parameter, and the first parameter indicates that the first PDU session that the first terminal device requests to establish is a PDU session having an association relationship.

Embodiment 40. The method according to any one of Embodiments 33 to 39, where the method further includes:
sending a ninth message to a fourth network device, where the ninth message is used to request to establish an N4 session and perform allocation on a first tunnel, and the first tunnel is associated with a first QoS flow; and
sending a tenth message to the fourth network device, where the tenth message is used to modify the N4 session and perform allocation on a second tunnel, the second tunnel is associated with the first QoS flow, and the tenth message further indicates to transfer data between different terminal devices through the first tunnel and the second tunnel, or send same data to different terminal devices, where
the N4 session is associated with the first PDU session and the second PDU session, the first QoS flow is associated with the first PDU session and the second PDU session, and the first QoS flow is used to transmit a data stream of a first service.

Embodiment 41. The method according to any one of Embodiments 33 to 39, where the method further includes:
sending a ninth message to a fourth network device, where the ninth message is used to request to establish an N4 session and perform allocation on a first tunnel, and the first tunnel is associated with a first QoS flow; and
sending a tenth message to the fourth network device, where the tenth message is used to modify the N4 session and perform allocation on a second tunnel, the second tunnel is associated with a second QoS flow, and the tenth message further indicates to transfer data between different terminal devices by using the first QoS flow and the second QoS flow, or send same data to different terminal devices, where
the N4 session is associated with the first PDU session and the second PDU session, the first QoS flow is associated with the second PDU session, the second QoS flow is associated with the first PDU session, and the first QoS flow and the second QoS flow are used to transmit a data stream of a first service.

Embodiment 42. The method according to Embodiment 40 or 41, where the method further includes:
sending second indication information to the fourth network device, where the second indication information indicates to set an access network tunnel corresponding to the first QoS flow as the first tunnel or the second tunnel, or indicate that an access network tunnel corresponding to the first QoS flow is the first tunnel and the second tunnel.

Embodiment 43. The method according to Embodiment 40 or 41, where the method further includes:
sending second indication information to the fourth network device, where the second indication information indicates to transmit the data stream of the first service by using the first QoS flow or the second QoS flow, or transmit the data stream of the first service by using the first QoS flow and the second QoS flow.

Embodiment 44. The method according to any one of Embodiments 40 to 43, where the ninth message further indicates to activate a TCP proxy function.

Embodiment 45. The method according to any one of Embodiments 40 to 44, where the method further includes:
receiving a parameter of the first service; and
receiving a first processing manner, where
the first processing manner is transferring data of the first service between the first PDU session and the second PDU session, or transmitting data of the first service in the first PDU session and the second PDU session; or
the first processing manner is transferring data of the first service between the first terminal device and the second terminal device, or transmitting data of the first service on the first terminal device and the second terminal device.

Embodiment 46. The method according to any one of Embodiments 40 and 42 to 45, where the method further includes:
configuring the first QoS flow for the first terminal device, where the first QoS flow is used to transmit the data stream of the first service.

Embodiment 47. The method according to any one of Embodiments 41 to 45, where the method further includes:
configuring the first QoS flow for the first terminal device, where the first QoS flow is different from the second QoS flow, and the first QoS flow and the second QoS flow are used to transmit the data stream of the first service.

Embodiment 48. A communication method, applied to a fourth network device, where the method includes:
receiving a ninth message from a second network device, where the ninth message is used to request to establish an N4 session and perform allocation on a first tunnel, the first tunnel is associated with a first QoS flow, the N4 session is associated with a second PDU session, the first QoS flow is associated with the second PDU session, and the first QoS flow is used to transmit a data stream of a first service; and
receiving a tenth message from the second network device, where the tenth message is used to modify the N4 session and perform allocation on a second tunnel, where
the second tunnel is associated with the first QoS flow, the tenth message further indicates to transfer data between different terminal devices through the first tunnel and the second tunnel, or send same data to different terminal devices, where the N4 session is further associated with a first PDU session, and the first QoS flow is further associated with the first PDU session, or
the second tunnel is associated with a second QoS flow, the tenth message further indicates to transfer data between different terminal devices by using the first QoS flow and the second QoS flow, or send same data to different terminal devices, where the N4 session is further associated with a first PDU session, the first QoS flow is associated with the second PDU session, the second QoS flow is associated with the first PDU session, and the first QoS flow and the second QoS flow are used to transmit the data stream of the first service.

Embodiment 49. The method according to Embodiment 48, where the ninth message further indicates to activate a TCP proxy function.

Embodiment 50. The method according to Embodiment 49, where the method further includes:
activating the TCP proxy function for the second terminal device, where the TCP proxy function is applicable to all services of the second terminal device; or
activating the TCP proxy function for the first service.

Embodiment 51. The method according to any one of Embodiments 47 to 49, where the method further includes:
receiving second indication information from the second network device, where the second indication information indicates to set an access network tunnel corresponding to the first QoS flow as the first tunnel or the second tunnel, or indicate that an access network tunnel corresponding to the first QoS flow is the first tunnel and the second tunnel.

Embodiment 52. The method according to any one of Embodiments 47 to 49, where the method further includes:
receiving second indication information from the second network device, where the second indication information indicates to transmit the data stream of the first service by using the first QoS flow or the second QoS flow, or transmit the data stream of the first service by using the first QoS flow and the second QoS flow.

Embodiment 53. A communication method, including:
a first network device receives a first message, where the first message is used to request to establish a first PDU session for a first terminal device, the first message further includes an identifier of a second terminal device and an identifier of a second PDU session, and the second PDU session is a PDU session of the second terminal device; and
the first network device selects a second network device for the first PDU session based on the identifier of the second terminal device and the identifier of the second PDU session, and sends a fifth message to the second network device, where the second network device is a network device serving the second PDU session, the fifth message is used to request to establish, for the first terminal device, the first PDU session having an association relationship, the fifth message further includes the identifier of the second terminal device and the identifier of the second PDU session, and the fifth message indicates to establish an association relationship between the first PDU session and the second PDU session;
the second network device sends a ninth message to a fourth network device, where the ninth message is used to request to establish an N4 session and perform allocation on a first tunnel, the first tunnel is associated with a first QoS flow, the N4 session is associated with a second PDU session, the first QoS flow is associated with the second PDU session, and the first QoS flow is used to transmit a data stream of a first service; and
the second network device sends, to the first terminal device, a message used to accept the establishment of the first PDU session.

Embodiment 54. The method according to Embodiment 53, where the method further includes:
the second network device sends a tenth message to the fourth network device, where the tenth message is used to modify the N4 session and perform allocation on a second tunnel, where
the second tunnel is associated with the first QoS flow, the tenth message further indicates to transfer data between different terminal devices through the first tunnel and the second tunnel, or send same data to different terminal devices, where the N4 session is further associated with a first PDU session, and the first QoS flow is further associated with the first PDU session, or
the second tunnel is associated with a second QoS flow, the tenth message further indicates to transfer data between different terminal devices by using the first QoS flow and the second QoS flow, or send same data to different terminal devices, where the N4 session is further associated with a first PDU session, the first QoS flow is associated with the second PDU session, the second QoS flow is associated with the first PDU session, and the first QoS flow and the second QoS flow are used to transmit the data stream of the first service.

Embodiment 55. A communication apparatus, including:
a sending unit, configured to send a first message, where the first message is used to request to establish a first PDU session for communication apparatus, the first message further includes an identifier of a second terminal device and an identifier of a second PDU session, the second PDU session is a PDU session of the second terminal device, and the identifier of the second terminal device and the identifier of the second PDU session are used by a first network device to select a second network device or used to establish an association relationship between the first PDU session and the second PDU session; and
a receiving unit, configured to receive a second message from the first network device, where the second message includes information for accepting the establishment of the first PDU session.

Embodiment 56. The communication apparatus according to Embodiment 55, where the first message further includes a session establishment request message, where
the identifier of the second terminal device and the identifier of the second PDU session are included in the session establishment request message;
the identifier of the second terminal device and the identifier of the second PDU session are included in the first message, but are not included in the session establishment request message; or
the identifier of the second terminal device and the identifier of the second PDU session are included in the session establishment request message, and are included in bearer space other than the session establishment request message in the first message.

Embodiment 57. The communication apparatus according to Embodiment 55 or 56, where the first message includes a first parameter, and the first parameter indicates that the first PDU session that the communication apparatus requests to establish is a PDU session having an association relationship.

Embodiment 58. The communication apparatus according to any one of Embodiments 55 to 57, where the second message further includes a second parameter, the second parameter indicates a manner of performing data processing on a PDU session, the manner of performing data processing includes transferring service data between the first PDU session and the second PDU session, or transmitting service data in the first PDU session and the second PDU session, and data processing can be performed between PDU sessions having an association relationship.

Embodiment 59. The communication apparatus according to any one of Embodiments 55 to 58, where the receiving unit is further configured to receive the identifier of the second terminal device and the identifier of the second PDU session from the second terminal device.

Embodiment 60. The communication apparatus according to any one of Embodiments 55 to 59, where the receiving unit is further configured to receive information about a first service from the second terminal device, where the first service is a service that is to be transferred from the second terminal device to a target terminal device, and the target terminal device includes the communication apparatus, or includes the second terminal device and the communication apparatus.

Embodiment 61. The communication apparatus according to any one of Embodiments 55 to 60, where the receiving unit is further configured to receive a connection parameter from the second terminal device, where the connection parameter includes slice information and/or a data network name DNN that correspond/corresponds to the second PDU session.

Embodiment 62. The communication apparatus according to any one of Embodiments 55 to 61, where the second message includes QoS flow information that is configured by the second network device for the communication apparatus and that is used to transmit the first service.

Embodiment 63. The communication apparatus according to any one of Embodiments 55 to 62, where the receiving unit is further configured to receive a third message from the first network device, where the third message includes the QoS flow information that is configured by the second network device for the communication apparatus and that is used to transmit the first service.

Embodiment 64. The communication apparatus according to Embodiment 62 or 63, where the QoS flow information includes an identifier of a QoS flow, and the identifier of the QoS flow is the same as or different from an identifier of a QoS flow of the first service transmitted by the second terminal device.

Embodiment 65. The communication apparatus according to any one of Embodiments 55 to 64, where the sending unit is further configured to send the information about the first service to the second network device, where the information about the first service includes an identifier of the first service and/or packet information for describing a data stream of the first service.

Embodiment 66. The communication apparatus according to Embodiment 65, where
the sending unit is further configured to send a first processing manner to the second network device, where
the first processing manner is transferring data of the first service between the first PDU session and the second PDU session, or transmitting data of the first service in the first PDU session and the second PDU session; or
the first processing manner is transferring data of the first service between the communication apparatus and the second terminal device, or transmitting data of the first service on the communication apparatus and the second terminal device.

Embodiment 67. The communication apparatus according to any one of Embodiments 55 to 66, where the sending unit is further configured to send first indication information to the second terminal device, where the first indication information indicates that the establishment of the first PDU session is completed, and/or is used to trigger a data processing process of a PDU session.

Embodiment 68. A communication apparatus, including:
a sending unit, configured to send a sixth message to a first network device, where the sixth message is used to request to establish a second PDU session for a second terminal device, the sixth message includes a first parameter, and the first parameter indicates that the second PDU session that the communication apparatus requests to establish is a PDU session having an association relationship and/or is used to select a second network device; and
a receiving unit, configured to receive an eighth message from the first network device, where the eighth message includes information for accepting the establishment of the second PDU session.

Embodiment 69. The communication apparatus according to Embodiment 68, where the eighth message further includes a second parameter, the second parameter indicates a manner of performing data processing on a PDU session, the manner of performing data processing includes transferring service data between the second PDU session and a PDU session of another terminal device, or transmitting service data in the second PDU session and a PDU session of another terminal device, and there is an association relationship between the PDU session of the another terminal device and the second PDU session, and data processing can be performed between PDU sessions having an association relationship.

Embodiment 70. The communication apparatus according to Embodiment 68 or 69, where the sending unit is further configured to send an identifier of the communication apparatus and an identifier of the second PDU session to the first terminal device.

Embodiment 71. The communication apparatus according to any one of Embodiments 68 to 70, where the sending unit is further configured to send information about a first service to the first terminal device, where the first service is a service that is to be transferred from the communication apparatus to a target terminal device, and the target terminal device includes the first terminal device, or includes the communication apparatus and the first terminal device.

Embodiment 72. The communication apparatus according to any one of Embodiments 68 to 71, where the sending unit is further configured to send a connection parameter to the first terminal device, where the connection parameter includes slice information and/or a data network name DNN that correspond/corresponds to the second PDU session.

Embodiment 73. The communication apparatus according to any one of Embodiments 68 to 72, where the sending unit is further configured to send the information about the first service to the second network device, where the information about the first service includes an identifier of the first service and/or packet information for describing a data stream of the first service.

Embodiment 74. The communication apparatus according to Embodiment 73, where
the sending unit is further configured to send a first processing manner to the second network device, where
the first processing manner is transferring data of the first service between the PDU session of the another terminal device and the second PDU session, or transmitting data of the first service in the PDU session of the another terminal device and the second PDU session; or
the first processing manner is transferring data of the first service between the first terminal device and the communication apparatus, or transmitting data of the first service on the first terminal device and the communication apparatus, where
there is an association relationship between the PDU session of the another terminal device and the second PDU session.

Embodiment 75. The communication apparatus according to Embodiment 73 or 74, where the receiving unit is further configured to: before the sending unit sends the information about the first service to the second network device, receive first indication information from the first terminal device, where the first indication information indicates that the establishment of the first PDU session is completed, and/or is used to trigger a data processing process of a PDU session.

Embodiment 76. A communication apparatus, including:
a receiving unit, configured to receive a first message, where the first message is used to request to establish a first PDU session for a first terminal device, the first message further includes an identifier of a second terminal device and an identifier of a second PDU session, and the second PDU session is a PDU session of the second terminal device; and
a processing unit, configured to select a second network device for the first PDU session based on the identifier of the second terminal device and the identifier of the second PDU session, where the second network device is a network device serving the second PDU session.

Embodiment 77. The communication apparatus according to Embodiment 76, where the communication apparatus further includes a sending unit, configured to send a second message to the first terminal device, where the second message includes information for accepting the establishment of the first PDU session.

Embodiment 78. The communication apparatus according to Embodiment 76 or 77, where the first message includes a first parameter, and the first parameter indicates that the first PDU session that the first terminal device requests to establish is a PDU session having an association relationship.

Embodiment 79. The communication apparatus according to any one of Embodiments 76 to 78, where the communication apparatus further includes a sending unit, configured to send a second parameter to the first terminal device, where the second parameter indicates a manner of performing data processing on a PDU session, the manner of performing data processing includes transferring service data between the first PDU session and the second PDU session, or transmitting service data in the first PDU session and the second PDU session, where data processing can be performed between PDU sessions having an association relationship.

Embodiment 80. The communication apparatus according to Embodiment 79, where the processing unit is further configured to:
obtain subscription information of the first terminal device; and
determine, based on the subscription information of the first terminal device, that a PDU session having an association relationship can be established for the first terminal device.

Embodiment 81. The communication apparatus according to any one of Embodiments 76 to 80, where the communication apparatus further includes a sending unit, where
the sending unit is configured to send a fourth message to a third network device, where the fourth message is used to request to obtain information about a network device serving the second PDU session; and
the receiving unit is further configured to receive an identifier of the second network device from the third network device.

Embodiment 82. The communication apparatus according to any one of Embodiments 76 to 81, where the communication apparatus further includes a sending unit, configured to send a fifth message to the second network device, where the fifth message is used to request to establish the first PDU session having the association relationship for the first terminal device.

Embodiment 83. The communication apparatus according to Embodiment 82, where the fifth message further includes the identifier of the second terminal device and the identifier of the second PDU session, and indicates to establish an association relationship between the first PDU session and the second PDU session.

Embodiment 84. The communication apparatus according to any one of Embodiments 76 to 83, where the processing unit is further configured to store association relationship information, where the association relationship information indicates an association relationship between the first PDU session and the second PDU session.

Embodiment 85. The communication apparatus according to any one of Embodiments 76 to 84, where the communication apparatus further includes a sending unit, where
the receiving unit is further configured to receive a sixth message, where the sixth message is used to request to establish the second PDU session for the second terminal device, the sixth message includes a first parameter, and the first parameter indicates that the second PDU session that the second terminal device requests to establish is a PDU session having an association relationship;
the processing unit is further configured to select the second network device that supports a PDU session having an association relationship; and
the sending unit is configured to send a seventh message to the second network device, where the seventh message is used to request to establish the second PDU session having the association relationship for the second terminal device.

Embodiment 86. The communication apparatus according to Embodiment 85, where the communication apparatus further includes a sending unit, configured to send an eighth message to the second terminal device, where the eighth message includes information for accepting the establishment of the second PDU session.

Embodiment 87. A communication apparatus, including:
a receiving unit, configured to receive a fifth message from a first network device, where the fifth message is used to request to establish a first PDU session having an association relationship for a first terminal device, the fifth message further includes an identifier of a second terminal device and an identifier of a second PDU session, the second PDU session is a PDU session of the second terminal device, and the fifth message indicates that an association relationship is established between the first PDU session and the second PDU session; and
a sending unit, configured to send, to the first terminal device, a message used to accept the establishment of the first PDU session.

Embodiment 88. The communication apparatus according to Embodiment 87, where the communication apparatus further includes a processing unit, configured to determine, based on subscription information of the first terminal device, that the first terminal device supports establishment of a PDU session having an association relationship.

Embodiment 89. The communication apparatus according to Embodiment 87 or 88, where the message used to accept the establishment of the first PDU session includes a second parameter, the second parameter indicates a manner of performing data processing on a PDU session, the manner of performing data processing includes transferring service data between the first PDU session and the second PDU session, or transmitting service data in the first PDU session and the second PDU session, and data processing can be performed between PDU sessions having an association relationship.

Embodiment 90. The communication apparatus according to any one of Embodiments 87 to 89, where the communication apparatus further includes a processing unit, configured to allocate, to the first PDU session, an IP address that is the same as an IP address of the second PDU session.

Embodiment 91. The communication apparatus according to any one of Embodiments 87 to 90, where the receiving unit is further configured to receive a seventh message from the first network device, where the seventh message is used to request to establish the second PDU session having an association relationship for the second terminal device.

Embodiment 92. The communication apparatus according to Embodiment 91, where the sending unit is further configured to send a second parameter to the second terminal device, where the second parameter indicates a manner of performing data processing on a PDU session, the manner of performing data processing includes transferring service data between the first PDU session and the second PDU session, or transmitting service data in the first PDU session and the second PDU session, where data processing can be performed between the PDU sessions having the association relationship.

Embodiment 93. The communication apparatus according to any one of Embodiments 87 to 92, where the fifth message includes a first parameter, and the first parameter indicates that the first PDU session that the first terminal device requests to establish is a PDU session having an association relationship.

Embodiment 94. The communication apparatus according to any one of Embodiments 87 to 93, where the sending unit is further configured to:
send a ninth message to a fourth network device, where the ninth message is used to request to establish an N4 session and perform allocation on a first tunnel, and the first tunnel is associated with a first QoS flow; and
send a tenth message to the fourth network device, where the tenth message is used to modify the N4 session and perform allocation on a second tunnel, the second tunnel is associated with the first QoS flow, and the tenth message further indicates to transfer data between different terminal devices through the first tunnel and the second tunnel, or send same data to different terminal devices, where
the N4 session is associated with the first PDU session and the second PDU session, the first QoS flow is associated with the first PDU session and the second PDU session, and the first QoS flow is used to transmit a data stream of a first service.

Embodiment 95. The communication apparatus according to any one of Embodiments 87 to 93, where the sending unit is further configured to:
send a ninth message to a fourth network device, where the ninth message is used to request to establish an N4 session and perform allocation on a first tunnel, and the first tunnel is associated with a first QoS flow; and
send a tenth message to the fourth network device, where the tenth message is used to modify the N4 session and perform allocation on a second tunnel, the second tunnel is associated with a second QoS flow, and the tenth message further indicates to transfer data between different terminal devices by using the first QoS flow and the second QoS flow, or send same data to different terminal devices, where
the N4 session is associated with the first PDU session and the second PDU session, the first QoS flow is associated with the second PDU session, the second QoS flow is associated with the first PDU session, and the first QoS flow and the second QoS flow are used to transmit a data stream of a first service.

Embodiment 96. The communication apparatus according to Embodiment 94 or 95, where the sending unit is further configured to send second indication information to the fourth network device, where the second indication information indicates to set an access network tunnel corresponding to the first QoS flow as the first tunnel or the second tunnel, or indicate that an access network tunnel corresponding to the first QoS flow is the first tunnel and the second tunnel.

Embodiment 97. The communication apparatus according to Embodiment 94 or 95, where the sending unit is further configured to send second indication information to the fourth network device, where the second indication information indicates to transmit the data stream of the first service by using the first QoS flow or the second QoS flow, or transmit the data stream of the first service by using the first QoS flow and the second QoS flow.

Embodiment 98. The communication apparatus according to any one of Embodiments 94 to 97, where the ninth message further indicates to activate a TCP proxy function.

Embodiment 99. The communication apparatus according to any one of Embodiments 94 to 98, where the receiving unit is further configured to:
receive a parameter of the first service; and
receive a first processing manner, where
the first processing manner is transferring data of the first service between the first PDU session and the second PDU session, or transmitting data of the first service in the first PDU session and the second PDU session; or
the first processing manner is transferring data of the first service between the first terminal device and the second terminal device, or transmitting data of the first service on the first terminal device and the second terminal device.

Embodiment 100. The communication apparatus according to any one of Embodiments 94 and 96 to 99, where the communication apparatus further includes a processing unit, configured to configure the first QoS flow for the first terminal device, where the first QoS flow is used to transmit the data stream of the first service.

Embodiment 101. The communication apparatus according to any one of Embodiments 95 to 99, where the communication apparatus further includes a processing unit, configured to configure the first QoS flow for the first terminal device, where the first QoS flow is different from the second QoS flow, and the first QoS flow and the second QoS flow are used to transmit the data stream of the first service.

Embodiment 102. A communication apparatus, including:
a receiving unit, configured to receive a ninth message from a second network device, where the ninth message is used to request to establish an N4 session and perform allocation on a first tunnel, the first tunnel is associated with a first QoS flow, the N4 session is associated with a second PDU session, the first QoS flow is associated with the second PDU session, and the first QoS flow is used to transmit a data stream of a first service, and
the receiving unit is further configured to receive a tenth message from the second network device, where the tenth message is used to modify the N4 session and perform allocation on a second tunnel, where
the second tunnel is associated with the first QoS flow, the tenth message further indicates to transfer data between different terminal devices through the first tunnel and the second tunnel, or send same data to different terminal devices, where the N4 session is further associated with a first PDU session, and the first QoS flow is further associated with the first PDU session, or
the second tunnel is associated with a second QoS flow, the tenth message further indicates to transfer data between different terminal devices by using the first QoS flow and the second QoS flow, or send same data to different terminal devices, where the N4 session is further associated with a first PDU session, the first QoS flow is associated with the second PDU session, the second QoS flow is associated with the first PDU session, and the first QoS flow and the second QoS flow are used to transmit the data stream of the first service.

Embodiment 103. The communication apparatus according to Embodiment 102, where the ninth message further indicates to activate a TCP proxy function.

Embodiment 104. The communication apparatus according to Embodiment 103, where the communication apparatus further includes a processing unit, configured to activate the TCP proxy function for the second terminal device, where the TCP proxy function is applicable to all services of the second terminal device; or
activate the TCP proxy function for the first service.

Embodiment 105. The communication apparatus according to any one of Embodiments 101 to 103, where the receiving unit is further configured to receive second indication information from the second network device, where the second indication information indicates to set an access network tunnel corresponding to the first QoS flow as the first tunnel or the second tunnel, or indicate that an access network tunnel corresponding to the first QoS flow is the first tunnel and the second tunnel.

Embodiment 106. The communication apparatus according to any one of Embodiments 101 to 103, where the receiving unit is further configured to receive second indication information from the second network device, where the second indication information indicates to transmit the data stream of the first service by using the first QoS flow or the second QoS flow, or transmit the data stream of the first service by using the first QoS flow and the second QoS flow.

Embodiment 107. A communication system including a first network device, a second network device, and a fourth network device, where
the first network device is configured to receive a first message, where the first message is used to request to establish a first PDU session for a first terminal device, the first message further includes an identifier of a second terminal device and an identifier of a second PDU session, and the second PDU session is a PDU session of the second terminal device;
the first network device is further configured to select the second network device for the first PDU session based on the identifier of the second terminal device and the identifier of the second PDU session, and send a fifth message to the second network device, where the second network device is a network device serving the second PDU session, the fifth message is used to request to establish, for the first terminal device, the first PDU session having an association relationship, the fifth message further includes the identifier of the second terminal device and the identifier of the second PDU session, and the fifth message indicates to establish an association relationship between the first PDU session and the second PDU session;
the second network device is configured to send a ninth message to the fourth network device, where the ninth message is used to request to establish an N4 session and perform allocation on a first tunnel, the first tunnel is associated with a first QoS flow, the N4 session is associated with a second PDU session, the first QoS flow is associated with the second PDU session, and the first QoS flow is used to transmit a data stream of a first service; and
the second network device is further configured to send, to the first terminal device, a message used to accept the establishment of the first PDU session.

Embodiment 108. The communication system according to Embodiment 107, where
the second network device is further configured to send a tenth message to the fourth network device, where the tenth message is used to modify the N4 session and perform allocation on a second tunnel, where
the second tunnel is associated with the first QoS flow, the tenth message further indicates to transfer data between different terminal devices through the first tunnel and the second tunnel, or send same data to different terminal devices, where the N4 session is further associated with the first PDU session, and the first QoS flow is further associated with the first PDU session, or
the second tunnel is associated with a second QoS flow, the tenth message further indicates to transfer data between different terminal devices by using the first QoS flow and the second QoS flow, or send same data to different terminal devices, where the N4 session is further associated with the first PDU session, the first QoS flow is associated with the second PDU session, the second QoS flow is associated with the first PDU session, and the first QoS flow and the second QoS flow are used to transmit the data stream of the first service.

Embodiment 109. An apparatus, including units for performing the method described in any one of embodiments of this application.

Embodiment 110. A computer program product, where the computer program product includes a computer program, and when the computer program is run on a computer, the computer is enabled to perform the method according to any one of Embodiments 1 to 13, the computer is enabled to perform the method according to any one of Embodiments 14 to 21, the computer is enabled to perform the method according to any one of Embodiments 22 to 32, the computer is enabled to perform the method according to any one of Embodiments 33 to 47, the computer is enabled to perform the method according to any one of Embodiments 48 to 52, or the computer is enabled to perform the method according to Embodiment 53 or 54.

## Claims

1. A communication method, applied to a first terminal device, wherein the method comprises:
sending a first message, wherein the first message is used to request to establish a first PDU session for the first terminal device, the first message further comprises an identifier of a second terminal device and an identifier of a second PDU session, the second PDU session is a PDU session of the second terminal device, and the identifier of the second terminal device and the identifier of the second PDU session are used by a first network device to select a second network device or used to establish an association relationship between the first PDU session and the second PDU session; and
receiving a second message from the first network device, wherein the second message comprises information for accepting the establishment of the first PDU session.

2. The method according to claim 1, wherein the first message further comprises a session establishment request message, wherein
the identifier of the second terminal device and the identifier of the second PDU session are comprised in the session establishment request message;
the identifier of the second terminal device and the identifier of the second PDU session are comprised in the first message, but are not comprised in the session establishment request message; or
the identifier of the second terminal device and the identifier of the second PDU session are comprised in the session establishment request message, and are comprised in bearer space other than the session establishment request message in the first message.

3. The method according to claim 1 or 2, wherein
the first message comprises a first parameter, and the first parameter indicates that the first PDU session that the first terminal device requests to establish is a PDU session having an association relationship.

4. The method according to any one of claims 1 to 3, wherein
the second message further comprises a second parameter, the second parameter indicates a manner of performing data processing on a PDU session, the manner of performing data processing comprises transferring service data between the first PDU session and the second PDU session, or transmitting service data in the first PDU session and the second PDU session, and data processing can be performed between PDU sessions having an association relationship.

5. The method according to any one of claims 1 to 4, wherein the method further comprises:
receiving the identifier of the second terminal device and the identifier of the second PDU session from the second terminal device.

6. The method according to any one of claims 1 to 5, wherein the method further comprises:
receiving information about a first service from the second terminal device, wherein the first service is a service that is to be transferred from the second terminal device to a target terminal device, and the target terminal device comprises the first terminal device, or comprises the second terminal device and the first terminal device.

7. The method according to any one of claims 1 to 6, wherein the method further comprises:
receiving a connection parameter from the second terminal device, wherein the connection parameter comprises slice information and/or a data network name DNN that correspond/corresponds to the second PDU session.

8. The method according to any one of claims 1 to 7, wherein
the second message comprises QoS flow information that is configured by the second network device for the first terminal device and that is used to transmit the first service.

9. The method according to any one of claims 1 to 7, wherein the method further comprises:
receiving a third message from the first network device, wherein the third message comprises QoS flow information that is configured by the second network device for the first terminal device and that is used to transmit the first service.

10. The method according to claim 8 or 9, wherein the QoS flow information comprises an identifier of a QoS flow, and the identifier of the QoS flow is the same as or different from an identifier of a QoS flow of the first service transmitted by the second terminal device.

11. The method according to any one of claims 1 to 10, wherein the method further comprises:
sending the information about the first service to the second network device, wherein the information about the first service comprises an identifier of the first service and/or packet information for describing a data stream of the first service.

12. The method according to claim 11, wherein the method further comprises:
sending a first processing manner to the second network device, wherein
the first processing manner is transferring data of the first service between the first PDU session and the second PDU session, or transmitting data of the first service in the first PDU session and the second PDU session; or
the first processing manner is transferring data of the first service between the first terminal device and the second terminal device, or transmitting data of the first service on the first terminal device and the second terminal device.

13. The method according to any one of claims 1 to 12, wherein the method further comprises:
sending first indication information to the second terminal device, wherein the first indication information indicates that the establishment of the first PDU session is completed, and/or is used to trigger a data processing process of a PDU session.

14. A communication method, applied to a first network device, wherein the method comprises:
receiving a first message, wherein the first message is used to request to establish a first PDU session for a first terminal device, the first message further comprises an identifier of a second terminal device and an identifier of a second PDU session, and the second PDU session is a PDU session of the second terminal device; and
selecting a second network device for the first PDU session based on the identifier of the second terminal device and the identifier of the second PDU session, wherein the second network device is a network device serving the second PDU session.

15. The method according to claim 14, wherein the method further comprises:
sending a second message to the first terminal device, wherein the second message comprises information for accepting the establishment of the first PDU session.

16. The method according to claim 14 or 15, wherein the first message comprises a first parameter, and the first parameter indicates that the first PDU session that the first terminal device requests to establish is a PDU session having an association relationship.

17. The method according to any one of claims 14 to 16, wherein the method further comprises:
sending a second parameter to the first terminal device, wherein the second parameter indicates a manner of performing data processing on a PDU session, the manner of performing data processing comprises transferring service data between the first PDU session and the second PDU session, or transmitting service data in the first PDU session and the second PDU session, and data processing can be performed between PDU sessions having an association relationship.

18. The method according to claim 17, wherein the method further comprises:
obtaining subscription information of the first terminal device; and
determining, based on the subscription information of the first terminal device, that a PDU session having an association relationship can be established for the first terminal device.

19. The method according to any one of claims 14 to 18, wherein the method further comprises:
sending a fourth message to a third network device, wherein the fourth message is used to request to obtain information about a network device serving the second PDU session; and
receiving an identifier of the second network device from the third network device.

20. The method according to any one of claims 14 to 19, wherein the method further comprises:
sending a fifth message to the second network device, wherein the fifth message is used to request to establish the first PDU session having the association relationship for the first terminal device.

21. The method according to claim 20, wherein the fifth message further comprises the identifier of the second terminal device and the identifier of the second PDU session, and indicates to establish an association relationship between the first PDU session and the second PDU session.

22. The method according to any one of claims 14 to 21, wherein the method further comprises:
storing association relationship information, wherein the association relationship information indicates the association relationship between the first PDU session and the second PDU session.

23. The method according to any one of claims 14 to 22, wherein the method further comprises:
receiving a sixth message, wherein the sixth message is used to request to establish the second PDU session for the second terminal device, the sixth message comprises a first parameter, and the first parameter indicates that the second PDU session that the second terminal device requests to establish is a PDU session having an association relationship;
selecting the second network device that supports a PDU session having an association relationship; and
sending a seventh message to the second network device, wherein the seventh message is used to request to establish the second PDU session having the association relationship for the second terminal device.

24. The method according to claim 23, wherein the method further comprises:
sending an eighth message to the second terminal device, wherein the eighth message comprises information for accepting the establishment of the second PDU session.

25. A communication apparatus, comprising a processor and a memory, wherein the memory is configured to store one or more computer programs, the one or more computer programs comprise computer-executable instructions, and when the communication apparatus runs, the processor executes the one or more computer programs stored in the memory, so that the communication apparatus performs the method according to any one of claims 1 to 13, or performs the method according to any one of claims 14 to 24.

26. A computer-readable storage medium, wherein the computer-readable storage medium is configured to store a computer program, and when the computer program is run on a computer, the computer is enabled to perform the method according to any one of claims 1 to 13, or perform the method according to any one of claims 14 to 24.
